# EUROPÄISCHE PATENTSCHRIFT

(11) **EP 4 588 734 B1**
(45) Veröffentlichungstag und Bekanntmachung des Hinweises auf die Patenterteilung: **07.10.2026**
(21) Anmeldenummer: 24152112.9
(22) Anmeldetag: 16.01.2024
(51) Int. Cl.: B60T 8/36, H01F 41/10

(54) **FAHRZEUGKOMPONENTE, ELEKTROPNEUMATISCHES FAHRZEUGSYSTEM, KRAFTFAHRZEUG UND VERFAHREN ZUM REDUZIEREN EINES BRUCHRISIKOS EINES SPULENDRAHTS EINES MAGNETVENTILS**
VEHICLE COMPONENT, VEHICLE ELECTROPNEUMATIC SYSTEM, VEHICLE, AND METHOD FOR REDUCING BREAKAGE RISK OF COIL WIRE OF SOLENOID VALVE
COMPOSANT DE VÉHICULE, SYSTÈME DE VÉHICULE ÉLECTROPNEUMATIQUE, VÉHICULE AUTOMOBILE ET PROCÉDÉ DE RÉDUCTION D'UN RISQUE DE RUPTURE D'UN FIL DE BOBINE D'UNE ÉLECTROVANNE

(43) Veröffentlichungstag der Anmeldung: 23.07.2025
(73) Patentinhaber: ZF CV Systems Europe BV, 1170 Brüssel (BE)
(72) Erfinder: KNOKE, Stefan, 30657 Hannover (DE); KEIL, Artur, 30419 Hannover (DE); HERZBERG, Nico, 30900 WEDEMARK (DE); ROOLFS, Arian, 30625 Hannover (DE)
(74) Vertreter: Schäferjohann, Volker

(56) Entgegenhaltungen:
- DE-A1- 102013 225 803
- DE-B3- 102014 115 206
- US-B2- 11 560 955

## Beschreibung

Die Erfindung betrifft eine Fahrzeugkomponente, die ein Magnetventil aufweist, ein elektropneumatisches Fahrzeugsystem, ein Kraftfahrzeug und ein Verfahren zum Reduzieren eines Bruchrisikos eines Spulendrahts eines Magnetventils. Die Erfindung betrifft insbesondere derartige Vorrichtungen, Systeme und Verfahren, die in Nutzfahrzeugen einsetzbar sind.

Magnetventile finden bei Kraftfahrzeugen, insbesondere bei Nutzfahrzeugen, vielfältig Anwendung. Sie spielen eine wichtige Rolle in pneumatischen Fahrzeugsystemen. Als ein Beispiel offenbart DE102013225803A1 ein Ventilspulenmodul zur Ansteuerung eines Ventils eines elektrohydraulischen Kraftfahrzeugsteuergeräts, insbesondere für ein Kraftfahrzeugbremssystem, umfassend zumindest eine aus zumindest einem elektrischen Leiter gebildete Ventilspule und zumindest eine Spulenanschlusskontaktierung zur elektrischen Kontaktierung der Ventilspule mit einer Leiterplatte.

Ein Anwendungsgebiet ist die Bremsanlage von Nutzfahrzeugen. Magnetventile werden hier eingesetzt, um den Druck in den Bremsleitungen zu regulieren. Sie ermöglichen ein schnelles und zuverlässiges Ansprechen der Bremsen, was die Sicherheit und Kontrolle des Fahrzeugs verbessert. Elektropneumatische Schaltgetriebe, elektropneumatische Kupplungssysteme, Reinigung von Fahrzeugsensoren und Luftaufbereitung sind weitere beispielhafte Anwendungsfelder.

Magnetventile können somit in Nutzfahrzeugen in einer Vielzahl von Anwendungen zum Einsatz kommen. Sie können zur verbesserten Leistung, Sicherheit und Umweltfreundlichkeit von Fahrzeugen beitragen.

Aufgrund unvermeidbarer Vibrationen und Erschütterungen kann ein erhöhtes Bruchrisiko für einen Spulendraht eines Magnetventils bestehen. Dies gilt insbesondere in Bereichen, in denen der Spulendraht an einem Metallteil anliegt und eine Relativbewegung zwischen Spulendraht und Metallteil zu einer Schwächung des Spulendrahts führt. Dies kann zu einer Reduzierung der Haltbarkeit des Magnetventils oder der das Magnetventil aufweisenden Fahrzeugkomponente führen. Ein Austausch des Magnetventils oder der das Magnetventil aufweisenden Fahrzeugkomponente kann aufwändig sein und zu einer unerwünschten Ausfallzeit eines Kraftfahrzeugs führen.

Aufgabe der Erfindung ist es, eine verbesserten Fahrzeugkomponente, Systeme oder Kraftfahrzeuge mit einer derartigen Fahrzeugkomponente und Verfahren bereitzustellen, die das Risiko eines reparaturbedingten Ausfalls eines Kraftfahrzeugs verringern können, indem sie die Lebensdauer eines Magnetventils verlängern.

Nach Ausführungsformen der Erfindung wird ein die Aufgabe gelöst durch eine Fahrzeugkomponente, ein elektropneumatisches Fahrzeugsystem, ein Kraftfahrzeug und ein Verfahren, wie sie in den unabhängigen Ansprüchen definiert sind. Die abhängigen Ansprüche definieren vorteilhafte oder bevorzugte Ausführungsbeispiele.

Eine Fahrzeugkomponente nach einer Ausführungsform weist ein Magnetventil auf. Das Magnetventil weist eine einen Spulendraht aufweisende Spule und einen Kontaktstift zum elektrischen Kontaktieren des Spulendrahts auf. Der Kontaktstift weist eine Schweißzone auf, an der der Spulendraht durch eine Schweißverbindung befestigt ist. Die Fahrzeugkomponenten weist eine Fixieranordnung zum mechanischen Fixieren des Spulendrahts in einem von der Schweißverbindung beabstandeten Bereich des Kontaktstifts auf.

Die Fahrzeugkomponente stellt verschiedene technische Wirkungen und Vorteile bereit. Durch die Fixieranordnung wird eine Relativbewegung zwischen dem Spulendraht und dem Kontaktstift jedenfalls in dem von der Schweißverbindung beabstandeten Bereich des Kontaktstifts reduziert oder unterbunden, in der die Fixieranordnung den Spulendraht fixiert. Dadurch wird das Risiko einer Relativbewegung zwischen Spulendraht und Kontaktstift, die zu einer Schwächung des Spulendraht führen kann, verringert.

Die Fixieranordnung kann vorteilhaft eingerichtet sein, den Spulendraht an dem von der Schweißverbindung beabstandeten Bereich des Kontaktstifts formschlüssig abzustützen.

Durch die formschlüssige Abstützung kann eine Relativbewegung zwischen dem Spulendraht und dem Kontaktstift an dem von der Schweißverbindung beabstandeten Bereich des Kontaktstifts reduziert werden. Dadurch wird das Bruchrisiko des Spulendrahts am Kontaktstift verringert.

Die Fixieranordnung kann vorteilhaft wenigstens ein an dem Kontaktstift vorgesehenes Formmerkmal aufweisen, das eingerichtet ist, den Spulendraht formschlüssig abzustützen.

Ein derartiges Formmerkmal ermöglicht, eine Relativbewegung zwischen dem Spulendraht und dem Kontaktstift zu reduzieren, ohne dass hierfür zusätzliche Stoffe oder Mittel wie beispielsweise Klebstoff oder vom Kontaktstift separate Befestigungselemente benötigt werden. Dies bietet Gewichtsvorteile und ermöglicht eine effiziente Fixierung.

Der Kontaktstift kann sich entlang einer Erstreckungsrichtung erstrecken. Ein Endabschnitt des Spulendrahts kann um den Kontaktstift gewickelt sein, so dass er die Erstreckungsrichtung des Kontaktstifts wenigstens einmal oder optional wenigstens zweimal umläuft. Die Fixieranordnung kann eingerichtet sein, eine Relativbewegung zwischen dem Spulendraht und Kontaktstift wenigstens entlang der Erstreckungsrichtung des Kontaktstift zu reduzieren.

Dadurch kann die Relativbewegung zwischen dem Spulendraht und dem Kontaktstift entlang derjenigen Richtung reduziert werden, entlang der in Abwesenheit der Fixieranordnung Erschütterungen besonders leicht zu einem Verrutschen des Spulendrahts relativ zum Kontaktstift führen.

Der Kontaktstift kann als Blechteil mit zwei Hauptflächen und diesen verbindenden Seitenflächen ausgebildet sein, deren Fläche jeweils kleiner als die der Hauptflächen ist. Das wenigstens eine Formmerkmale kann an wenigstens einer der Seitenflächen ausgebildet sein.

Dadurch kann die Relativbewegung zwischen Spulendraht und Kontaktstift insbesondere dort reduziert werden, wo der Spulendraht aufgrund seiner besonders starken Krümmung einem besonders hohen Bruchrisiko im Fall einer fortgesetzten Relativbewegung zum Kontaktstift, beispielsweise bei Vibrationen oder anderen Erschütterungen, ausgesetzt ist.

Das wenigstens eine Formmerkmal kann wenigstens eine Vertiefung aufweisen, durch die sich der Spulendraht erstreckt.

Dadurch kann eine formschlüssige Abstützung des Spulendrahts am Kontaktstift unter Verwendung wenigstens einer Vertiefung erreicht werden, die in besonders einfacher und effizienter Weise gefertigt werden kann. Beispielsweise kann die wenigstens eine Vertiefung in einem spanenden oder nicht spanenden Prozess gefertigt werden. Die wenigstens eine Vertiefung kann beim Stanzen des Kontaktstifts als Blechteil aus einem Blech erzeugt werden.

Die wenigstens eine Vertiefung kann in einer Seitenfläche eines als Blechteils ausgebildeten Kontaktstifts vorgesehen sein, wobei sich die Seitenfläche zwischen den beiden Hauptflächen des Kontaktstifts erstreckt. Die wenigstens eine Vertiefung kann sich durchgängig von einer Hauptfläche zur gegenüberliegenden Hauptfläche erstrecken.

Dadurch kann die Relativbewegung zwischen Spulendraht und Kontaktstift insbesondere dort reduziert werden, wo der Spulendraht aufgrund seiner besonders starken Krümmung einem besonders hohen Bruchrisiko im Fall einer fortgesetzten Relativbewegung zum Kontaktstift, beispielsweise bei Vibrationen oder anderen Erschütterungen, ausgesetzt ist.

Der Kontaktstift kann eine erste Seitenfläche und eine zweite Seitenfläche aufweisen, wobei sich die erste Seitenfläche und die zweite Seitenfläche parallel zu einer Erstreckungsrichtung des Kontaktstifts sind und sich zwischen den zwei Hauptflächen erstrecken. Die wenigstens eine Vertiefung kann eine erste Vertiefung oder mehrere erste Vertiefungen, die an der ersten Seitenfläche ausgebildet sind, und eine zweite Vertiefung oder mehrere zweite Vertiefungen, die an der zweiten Seitenfläche ausgebildet sind, aufweisen.

Dadurch wird eine Relativbewegung zwischen Spulendraht und Kontaktstift weiter reduziert. Darüber hinaus wird die Fixierung des Spulendrahts in besonders einfacher Weise möglich, da der Spulendraht durch Vertiefungen an gegenüberliegenden Seitenflächen des Kontaktstifts geführt werden kann.

Die wenigstens eine Vertiefung kann eine kerbenförmige Vertiefung aufweisen.

Dadurch kann eine formschlüssige Abstützung des Spulendrahts am Kontaktstift unter Verwendung wenigstens einer kerbenförmigen Vertiefung erreicht werden, die in besonders einfacher und effizienter Weise gefertigt werden kann.

Die wenigstens eine kerbenförmige Vertiefung kann zwei gegeneinander geneigte Nut-Begrenzungsflächen aufweisen. Die zwei gegeneinander geneigten NutBegrenzungsflächen können sich durchgängig von einer Hauptfläche zur gegenüberliegenden Hauptfläche eines als Blechteil ausgebildeten Kontaktstifts erstrecken.

Dadurch kann die Relativbewegung zwischen Spulendraht und Kontaktstift insbesondere dort reduziert werden, wo der Spulendraht aufgrund seiner besonders starken Krümmung einem besonders hohen Bruchrisiko im Fall einer fortgesetzten Relativbewegung zum Kontaktstift, beispielsweise bei Vibrationen oder anderen Erschütterungen, ausgesetzt ist.

Die wenigstens eine kerbenförmige Vertiefung kann abgerundete oder abgefaste Übergangsflächen benachbart den Nut-Begrenzungsflächen aufweisen, beispielsweise eine abgerundete oder abgefaste Übergangsfläche zwischen den beiden Nut-Begrenzungsflächen und/oder eine weitere abgerundete oder abgefaste Übergangsfläche jeweils zwischen einer der Nut-Begrenzungsflächen und einem entlang der Erstreckungsrichtung des Kontaktstifts benachbarten Region der Seitenfläche, in der die kerbenförmige Vertiefung ausgebildet ist.

Dadurch kann das Risiko einer Beschädigung des Spulendrahts noch weiter reduziert und das Ausfallrisiko der Fahrzeugkomponente verringert werden.

Die wenigstens eine kerbenförmige Vertiefung kann eine Vertiefungsbreite aufweisen, die entlang der Erstreckungsrichtung des Kontaktstifts gemessen wird. Die Vertiefungsbreite (beispielsweise eine Nutbreite) kann wenigstens gleich einem Drahtdurchmesser des Spulendrahts sein. Alternativ oder zusätzlich kann die wenigstens eine kerbenförmige Vertiefung eine Vertiefungstiefe (gemessen relativ zur Seitenfläche des Kontaktstifts, in der die Vertiefung ausgebildet ist) aufweisen, die wenigstens gleich dem Drahtdurchmesser des Spulendrahts ist.

Dadurch wird eine besonders sichere formschlüssige Abstützung des Spulendrahts am Kontaktstift erreicht. Das Risiko einer Relativbewegung zwischen Spulendraht und Kontaktstift wird weiter verringert.

Die Fixieranordnung kann mehrere voneinander beabstandete Vertiefungen aufweisen, durch die sich der Spulendraht erstreckt. Die mehreren voneinander beabstandeten Vertiefungen können entlang einer Erstreckungsrichtung des Kontaktstifts voneinander beabstandet sein. Wenn der Kontaktstift als Blechteil mit zwei Hauptflächen und sich zwischen diesen erstreckenden Seitenflächen ausgebildet ist, können die mehrere voneinander beabstandeten Vertiefungen in wenigstens einer der Seitenfläche vorgesehen und entlang einer Erstreckungsrichtung des Kontaktstifts voneinander beabstandet sein.

Dadurch wird eine Fixierung an mehreren Positionen entlang der Erstreckungsrichtung des Kontaktstifts erreicht und eine Relativbewegung zwischen Spulendraht und Kontaktstift weiter reduziert. Darüber hinaus wird die Fixierung des Spulendrahts in besonders einfacher Weise möglich, da der Spulendraht durch verschiedene Vertiefungen geführt werden kann.

Der Kontaktstift kann zwei Hauptflächen, eine erste Seitenfläche und eine zweite Seitenfläche aufweisen, wobei sich die erste Seitenfläche und die zweite Seitenfläche parallel zu einer Erstreckungsrichtung des Kontaktstifts sind und sich zwischen den zwei Hauptflächen erstrecken. Die mehreren voneinander beabstandeten Vertiefungen können eine erste Abfolge von mehreren Vertiefungen, die an der ersten Seitenfläche ausgebildet sind, und eine zweite Abfolge von mehreren Vertiefungen, die an der zweiten Seitenfläche ausgebildet sind, aufweisen.

Dadurch wird eine Fixierung an mehreren Positionen entlang der Erstreckungsrichtung des Kontaktstifts erreicht und eine Relativbewegung zwischen Spulendraht und Kontaktstift weiter reduziert. Darüber hinaus wird die Fixierung des Spulendrahts in besonders einfacher Weise möglich, da der Spulendraht durch verschiedene Vertiefungen an gegenüberliegenden Seitenflächen des Kontaktstifts geführt werden kann.

Der Kontaktstift kann sich entlang einer Erstreckungsrichtung erstrecken, wobei der Spulendraht entlang der Erstreckungsrichtung den Kontaktstift schraubenlinienförmig umläuft.

Dadurch kann ein Endabschnitt des Spulendrahts, der an dem Kontaktstift durch die Schweißverbindung angeschweißt ist, sicher zur Schweißzone geführt werden.

Die Fixieranordnung kann eingerichtet sein, eine Relativbewegung zwischen dem Spulendraht und dem Kontaktstift entlang der Erstreckungsrichtung zu reduzieren oder zu unterbinden.

Dadurch kann die Relativbewegung zwischen Spulendraht und Kontaktstift entlang derjenigen Richtung effizient reduziert werden, entlang der ohne Verwendung der Fixieranordnung im Fall von fortgesetzten Erschütterungen eine Schwächung des Spulendrahts aufgrund einer Relativbewegung drohen würde.

Der Kontaktstift kann eine in einer quer zur Erstreckungsrichtung verlaufenden Breitenrichtung gemessene Kontaktstiftbreite aufweisen. Die Kontaktstiftbreite kann in dem von der Schweißverbindung beabstandeten Bereich des Kontaktstifts als Funktion einer Position entlang der Erstreckungsrichtung variieren.

Dadurch kann ein Formmerkmal gebildet werden, das eine formschlüssige Abstützung des Spulendrahts an dem Kontaktstift bereitstellt. Das so ausgebildete Formmerkmal kann insbesondere wenigstens einen Vorsprung oder wenigstens eine Vertiefung in einer Seitenwand des Kontaktstifts aufweisen.

Die Kontaktstiftbreite kann in dem von der Schweißverbindung beabstandeten Bereich des Kontaktstifts eine nichtmonotone Veränderung aufweist.

Dadurch kann ein Formmerkmal gebildet werden, das eine formschlüssige Abstützung des Spulendrahts an dem Kontaktstift bereitstellt.

Die Fahrzeugkomponente kann eine Fahrzeugkomponente eines elektropneumatischen Getriebesystems, eines elektropneumatischen Kupplungssystems, eines elektropneumatisches Bremssystems, eines Luftaufbereitungssystems, eines elektropneumatisches Nivellierungssystems, eines elektropneumatischen Luftfedersystem oder eines elektropneumatischen Bremssystems sein.

Dadurch kann das Risiko, dass die Lebensdauer eines derartigen elektronpneumatischen Fahrzeugsystems durch Spulendrahtbruch verringert wird, reduziert werden.

Der Spulendraht kann frei von einer Ummantelung sein.

Dadurch wird das Risiko eines Bruchs des Spulendrahts durch die Fixierung mit Hilfe der Fixieranordnung spezifisch für ein Magnetventil mit einem unummantelten Spulendraht verringert. Ein derartiges Magnetventil ist typischerweise anfälliger für einen Bruch des Spulendrahts oder eine anderweitige Schwächung des Spulendrahts aufgrund einer Reibung des Spulendrahts am Kontaktstift.

Die Fixieranordnung kann eingerichtet sein, den Spulendraht durch mechanische Einwirkung wenigstens eines Formmerkmals des Kontaktstifts auf den Spulendraht zu fixieren, ohne dass zur Fixierung von dem Kontaktstift und Spulendraht verschiedene Materialien eingesetzt werden.

Dadurch kann das Risiko eines Bruchs des Spulendrahts durch die Fixierung mit Hilfe der Fixieranordnung in besonders effizienter Weise verringert werden.

Nach einer weiteren Ausführungsform der Erfindung wird ein elektropneumatisches Fahrzeugsystem bereitgestellt, das die Fahrzeugkomponente nach einer Ausführungsform oder einem Ausführungsbeispiel aufweist.

Dadurch kann das Risiko, dass die Lebensdauer eines derartigen elektronpneumatischen Fahrzeugsystems durch Spulendrahtbruch verringert wird, reduziert werden.

Das elektropneumatische Fahrzeugsystem kann ein elektropneumatisches Getriebesystem, ein elektropneumatisches Kupplungssystem, ein elektropneumatisches Bremssystem, ein Luftaufbereitungssystem, ein elektropneumatisches Nivellierungssystem, ein elektropneumatisches Luftfedersystem und/oder ein elektropneumatisches Bremssystem aufweisen.

Dadurch kann das Risiko reduziert werden, dass die Lebensdauer eines derartigen elektronpneumatischen Fahrzeugsystems durch einen Bruch eines Spulendrahts verringert wird.

Nach einer weiteren Ausführungsform wird ein Kraftfahrzeug bereitgestellt, das die Fahrzeugkomponente oder das elektropneumatische Fahrzeugsystem nach einer Ausführungsform oder einem Ausführungsbeispiel aufweist.

Dadurch kann das Risiko eines durch einen Bruch eines Spulendrahts hervorgerufenen Ausfalls des Kraftfahrzeugs reduziert werden.

Nach einer weiteren Ausführungsform wird ein Verfahren zum Reduzieren eines Bruchrisikos eines Spulendrahts eines Magnetventils einer Fahrzeugkomponente bereitgestellt. Das Magnetventil weist einen Kontaktstift auf. Der Kontaktstift weist eine Schweißzone auf. Der Spulendraht ist durch eine Schweißverbindung an der Schweißzone befestigt ist. Das Verfahren weist ein mechanischen Fixieren des Spulendrahts in einem von der Schweißverbindung beabstandeten Bereich des Kontaktstifts auf, um eine Relativbewegung zwischen dem Spulendraht und dem Kontaktstift in dem von der Schweißverbindung beabstandeten Bereich des Kontaktstifts zu verringern oder zu unterbinden.

Das Verfahren stellt verschiedene technische Wirkungen und Vorteile bereit. Durch das mechanische Fixieren wird eine Relativbewegung zwischen dem Spulendraht und dem Kontaktstift jedenfalls in dem von der Schweißverbindung beabstandeten Bereich des Kontaktstifts reduziert oder unterbunden, in der die Fixieranordnung den Spulendraht fixiert. Dadurch wird das Risiko einer Relativbewegung zwischen Spulendraht und Kontaktstift, die zu einer Schwächung des Spulendraht führen kann, verringert.

Das Verfahren kann ferner ein Bilden wenigstens eines Formmerkmals an dem Kontaktstift aufweisen, wobei das wenigstens eine Formmerkmal eingerichtet ist, den Spulendraht formschlüssig abzustützen. Das mechanische Fixieren kann ein schraubenförmiges Winden eines Endabschnitts des Spulendrahts um den Kontaktstift derart aufweisen, dass das wenigstens eine Formmerkmal den Spulendraht formschlüssig abstützt.

Ein derartiges Formmerkmal ermöglicht, eine Relativbewegung zwischen dem Spulendraht und dem Kontaktstift zu reduzieren, ohne dass hierfür zusätzliche Stoffe oder Mittel wie beispielsweise Klebstoff oder vom Kontaktstift separate Befestigungselemente benötigt werden. Dies bietet Gewichtsvorteile und ermöglicht eine effiziente Fixierung.

Das mechanische Fixieren kann eine Abstimmung des Wickelns des Spulendrahts um den Kontaktstift auf das wenigstens eine Formmerkmal derart aufweisen, dass das wenigstens eine Formmerkmal die mechanische Abstützung des um den Kontaktstift gewickelten Spulendrahts unterstützt.

Dadurch kann das Risiko eines Bruchs des Spulendrahts besonders zuverlässig verringert werden.

Das Verfahren kann von oder mit der Fahrzeugkomponente nach einer Ausführungsform oder einem Ausführungsbeispiel, dem elektropneumatische Fahrzeugsystem nach einer Ausführungsform oder einem Ausführungsbeispiel und/oder dem Kraftfahrzeug nach einer Ausführungsform oder einem Ausführungsbeispiel ausgeführt werden.

Weitere optionale Merkmale des Verfahrens und die damit jeweils erzielten Wirkungen entsprechen den unter Bezugnahme auf die Vorrichtungen und Systeme nach Ausführungsbeispielen erläuterten Merkmalen und Wirkungen.

Die Fahrzeugkomponente und das Verfahren nach Ausführungsbeispielen sind bei pneumatischen Fahrzeugsystemen von Kraftfahrzeugen einsetzbar, insbesondere von Nutzfahrzeugen. Elektropneumatische Schaltgetriebe, Kupplungssysteme, Nivellierungssysteme, Luftfedersysteme, Luftaufbereitungsanlagen und Bremssysteme von Nutzfahrzeugen sind Anwendungsfelder, in denen die Fahrzeugkomponente und das Verfahren besonders vorteilhaft einsetzbar sind.

Weitere Vorteile, Merkmale und Einzelheiten der Erfindung ergeben sich aus der nachfolgenden Beschreibung bevorzugter Ausführungsformen. Ausführungsformen der Erfindung werden nachfolgend insbesondere unter Bezugnahme auf die Figuren beschrieben. Diese stellen die Ausführungsformen nicht notwendigerweise maßstäblich dar. Die Figuren sind, wo zur Erläuterung zweckmäßig, in schematischer und/oder leicht verzerrter Form ausgeführt.
- Fig. 1: zeigt ein Magnetventil einer Fahrzeugkomponente nach einem Ausführungsbeispiel.
- Fig. 2: zeigt eine perspektivische Teilansicht des Magnetventils.
- Fig. 3: zeigt eine Draufsicht eines Kontaktstifts des Magnetventils.
- Fig. 4: zeigt eine perspektivische Teilansicht einer weiteren Ausgestaltung des Kontaktstifts des Magnetventils.
- Fig. 5: zeigt eine Draufsicht einer noch weiteren Ausgestaltung des Kontaktstifts des Magnetventils.
- Fig. 6: zeigt ein Magnetventil einer Fahrzeugkomponente nach einem weiteren Ausführungsbeispiel.
- Fig. 7: zeigt eine Fahrzeugkomponente mit wenigstens einem Magnetventil.
- Fig. 8: zeigt ein elektropneumatisches Fahrzeugsystem, das die Fahrzeugkomponente von Fig. 7 aufweist.
- Fig. 9: ist eine schematische teilweise Darstellung eines Fahrzeugs, das ein elektropneumatisches Schaltgetriebesystem aufweist.
- Fig. 10: ist eine schematische Darstellung eines Fahrzeugs, das ein als automatisches Schaltgetriebe ausgestaltetes elektropneumatisches Schaltgetriebe aufweist.
- Fig. 11: ist eine schematische Darstellung eines Fahrzeugs, das ein elektropneumatisches Bremssystem aufweist.
- Fig. 12: ist eine schematische Darstellung eines Fahrzeugs, das ein elektropneumatisches Kupplungssystem aufweist.
- Fig. 13: ist eine schematische teilweise Darstellung eines Fahrzeugs, das ein Nivellierungssystem aufweist.
- Fig. 14: ist eine schematische teilweise Darstellung eines Fahrzeugs, das ein Luftfederungssystem aufweist.
- Fig. 15: ist eine schematische Darstellung eines Bremssystems, das mehrere Modulatoren aufweist.
- Fig. 16: ist eine schematische teilweise Darstellung eines Fahrzeugs, das eine Luftversorgungsanlage aufweist.
- Fig. 17: ist ein Flussdiagramm eines Verfahrens zum Reduzieren eines Bruchrisikos eines Spulendrahts eines Magnetventils.
- Fig. 18: ist ein Flussdiagramm eines Herstellungsverfahrens des Magnetventils.

Nach einer Ausführungsform der Erfindung wird eine Fahrzeugkomponente bereitgestellt, die ein Magnetventil aufweist. Das Magnetventil weist eine Ausgestaltung auf, die das Risiko eines Bruchs eines Spulendrahts des Magnetventils reduziert.

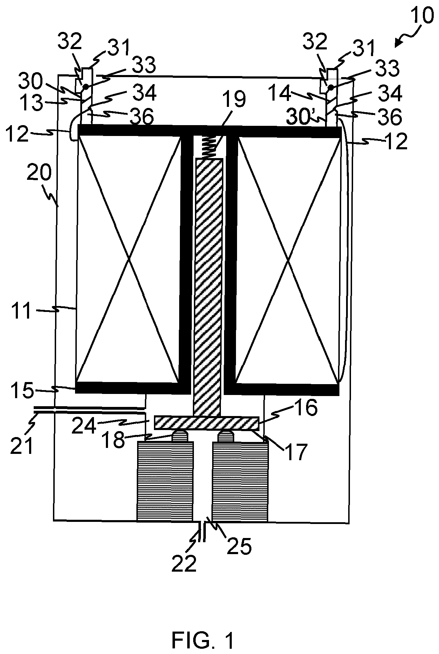

Figur 1 zeigt eine schematische Darstellung eines Magnetventils 10. Das Magnetventil 10 ist beispielhaft als 2/2-Wege-Ventil dargestellt, ist jedoch nicht auf diese Anzahl von Anschlüssen und/oder Ventilstellungen beschränkt. Das Magnetventil 10 weist eine Spule 11 auf. Die Spule 11 ist selektiv mit Strom versorgbar, um einen Dichtkörper 16 relativ zu einem Ventilsitz 18 zu bewegen. Beispielsweise kann bei Energetisierung der Spule 11 der Dichtkörper 16 unter Einfluss eines von der Spule 11 erzeugten Magnetfelds so relativ zum Ventilsitz 18 bewegt werden, dass eine Dichtfläche 17 des Dichtkörpers 16 vom Ventilsitz 18 wegbewegt wird.

Zur Energieversorgung der Spule 11 weist das Magnetventil einen Kontaktstift 30 und einen weiteren Kontaktstift 30' auf. Zur elektrischen Kontaktierung des Magnetventils derart, dass selektiv Stromfluss durch die Spule 11 erzeugbar ist, weist jeder der Kontaktstift 30, 30' jeweils einen Anschlussbereich 31 auf. Der Anschlussbereich 31 ist für eine elektrisch leitende Verbindung mit einem Leiter eingerichtet. Der Anschlussbereich 31 kann als Verbinder ausgestaltet sein. Der weitere Kontaktstift 30' kann eine Ausgestaltung aufweisen, die derjenigen des Kontaktstifts 30 entspricht. Daher wird in der nachfolgenden Beschreibung hauptsächlich auf Merkmale des Kontaktstifts 30 Bezug genommen, wobei die entsprechenden Merkmale identisch oder in ähnlicher Weise am weiteren Kontaktstift 30' realisiert sein können.

Die Spule 11 weist einen Spulendraht 12 auf. Der Spulendraht 12 weist einen Endabschnitt 13 und einen weiteren Endabschnitt 14 auf. Der Endabschnitt 13 ist über eine Schweißverbindung 33 an einer Schweißzone 32 des Kontaktstifts 30 angeschweißt. Der weitere Endabschnitt 14 ist in ähnlicher Weise über eine Schweißverbindungen 33 an einer Schweißzone 32 des weiteren Kontaktstifts 30' angeschweißt.

Das Magnetventil 10 weist eine Fixieranordnung zum Reduzieren oder Unterbinden einer Relativbewegung zwischen dem Endabschnitt 13 und einem Bereich 36 des Kontaktstifts 30 auf, der von der Schweißzone 32 beabstandet ist und an dem der Spulendraht den Kontaktstift 11 berührt. Die Fixieranordnung ist bei dem Magnetventil 10 von Figur 1 derart ausgestaltet, dass sie ein Formmerkmal des Kontaktstifts 30 aufweist. Das Formmerkmal kann als nutförmiges Formmerkmal 34 ausgebildet sein. Der Spulendraht 12 wird in dem Bereich 36 des Kontaktstifts 30 durch das nutförmige Formmerkmal 34 formschlüssig abgestützt. Auf diese Weise wird das Risiko eines Verrutschens des Spulendrahts 12 entlang einer Erstreckungsrichtung des Kontaktstifts 30 jedenfalls in dem Bereich 36 reduziert.

Ein Verrutschen des Spulendrahts 12 in Anlage an dem Kontaktstift 30 würde bei fortgesetzter Erschütterung des Magnetventils 10, beispielsweise aufgrund einer Vibration eines Fahrgestells, zu einer Schwächung des Spulendrahts 12 im Endabschnitt 13 und somit zu einem erhöhten Bruchrisiko führen. Da die Fixieranordnung eine formschlüssige Abstützung des Spulendrahts 12 bereitstellt, wird das Risiko eines derartigen Verrutschens verringert. Somit wird das Risiko eines Defekts des Magnetventils 10 verringert. Dadurch wird wiederum das Risiko eines Ausfalls eines pneumatischen Fahrzeugsystems, das das Magnetventil 10 aufweist, und/oder eines Kraftfahrzeug, das das Magnetventil 10 aufweist, zu Wartungszwecken reduziert.

Um den Spulendraht 12 im Endabschnitt 13 oder im weiteren Endabschnitt 14 besonders sicher formschlüssig abzustützen, kann das am Kontaktstift 30 und/oder weiteren Kontaktstift 30' ausgebildete Formmerkmal eine Geometrie aufweisen, die auf einen Durchmesser des Spulendrahts 12 abgestimmt ist. Beispielsweise kann die Nut oder nutförmige Vertiefung 34 eine Tiefe und/oder Breite aufweisen, die wenigstens gleich dem Durchmesser des Spulendrahts 12 ist.

Vorteilhaft ist der Spulendraht 12 ein unummantelter Spulendraht 12, wobei ein metallisches Material des Spulendrahts 12 unmittelbarer an dem Kontaktstift 30 anliegt. Bei Magnetventilen 10 mit einem unummantelten Spulendraht 12 ist die durch die Fixieranordnung bereitgestellte Wirkung, eine Relativbewegung zwischen dem Spulendraht 12 und dem Kontaktstift 30 im Endabschnitt 13 zu verringern oder zu unterbinden, besonders vorteilhaft.

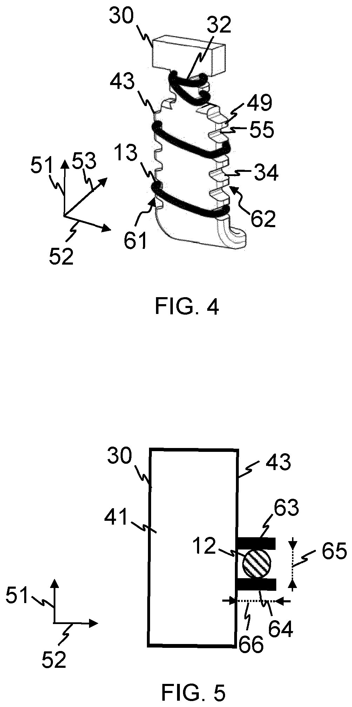

Der Endabschnitt 13 des Spulendrahts 12 kann den Kontaktstift 30 wenigstens einmal und optional mehr als einmal umlaufen, beispielsweise in Form einer Schraubenlinie. Eine Steigung oder Ganghöhe der Schraubenlinie kann als Funktion der Position entlang einer Erstreckungsrichtung des Kontaktstifts 30 veränderlich sein. Bei wenigstens einem der Umläufe um den Kontaktstift 30 kann der Spulendraht 12 im Endabschnitt 13 durch das nutförmige Formmerkmal 34 formschlüssig abgestützt werden. Bei weiteren Ausgestaltungen kann die Fixieranordnung derart ausgestaltet sein, dass sie den Spulendraht 12 in jedem von wenigstens zwei Umläufen um den Kontaktstift 30 jeweils formschlüssig abstützt, wie beispielsweise unter Bezugnahme auf Figur 4 näher beschrieben wird.

Das Magnetventil 10 kann, wie in Figur 1 dargestellt, als 2/2-Wege-Ventil ausgestaltet sein, ohne darauf beschränkt zu sein. Das Magnetventil 10 kann einen ersten Anschluss 21 aufweisen, der direkt oder indirekt mit einer Druckgasquelle koppelbar ist. Das Magnetventil 10 kann einen zweiten Anschluss 22 aufweisen, der direkt oder indirekt mit einem pneumatischen Verbraucher verbindbar ist, beispielsweise einem Luftverbraucher eines elektropneumatischen Getriebesystems, eines elektropneumatischen Kupplungssystems, eines elektropneumatisches Bremssystems, eines Luftaufbereitungssystems, eines elektropneumatisches Nivellierungssystems, eines elektropneumatischen Luftfedersystem oder eines elektropneumatischen Bremssystems. Eine selektive Bestromung der Spule 11 zur Betätigung des Magnetventils 10 führt zu einer Verschiebung des Dichtkörpers 16 relativ zum Ventilsitz 17. So kann das Magnetventil 10 zwischen einer ersten Stellung und einer zweiten Stellung umgeschaltet werden. Beispielsweise kann in der ersten Stellung ein mit dem ersten Anschluss 21 fluidisch verbundener ersten Fluidraum 24 gegen einen mit dem zweiten Anschluss 22 fluidisch verbundenen zweiten Fluidraum 25 abgedichtet sein, wenn die Dichtfläche 17 am Ventilsitz 18 anliegt. In der zweiten Stellung kann aufgrund der Verschiebung der Dichtfläche 17 weg vom Ventilsitz 18 eine Fluidverbindung zwischen dem ersten Anschluss 21 und dem zweiten Anschluss 22 hergestellt werden, wobei Gas (beispielsweise Luft) vom ersten Fluidraum 24 in den zweiten Fluidraum 25 und/oder vom zweiten Fluidraum 25 in den ersten Fluidraum 24 strömen kann. Der erste Anschluss 21 und der zweite Anschluss 22 können an einem Gehäuse 20 vorgesehen sein, in dem die Spule 21, der erste Fluidraum 24 und der zweite Fluidraum 25 angeordnet sind.

Das Magnetventil 10 weist einen Spulenträger 15 auf, an dem die Spule 11 angeordnet ist. Der Endabschnitt 13 und/oder der weitere Endabschnitt 14 können radial von einem Spulenkörper abgeführt werden. Andere Abführungen (beispielsweise axial) können bei den Ausführungsbeispielen ebenfalls zum Einsatz kommen.

Das Magnetventil 10 kann eingerichtet sein, den Dichtkörper 16 in eine der Ventilstellungen vorzuspannen. Dies kann unter Schwerkrafteinfluss und/oder unter Einsatz eines federelastischen Mittels 19 erfolgen. Dadurch kann das Magnetventil 10 beispielsweise in eine normal geschlossene Stellung vorgespannt sein.

Die Fixieranordnung, die eingerichtet ist, den Spulendraht 12 in einem Endabschnitt 13 formschlüssig am Kontaktstift 30 derart abzustützen, dass das Risiko eines Verrutschens entlang des Kontaktstifts 30 reduziert wird, kann verschiedene Ausgestaltungen aufweisen. Unabhängig von der spezifischen Ausgestaltung des Kontaktstifts 30 kann der Kontaktstift 30 als Blechteil ausgebildet sein. Eine Blechdicke des Blechteils kann von 0,5 mm bis 10,0 mm, von 0,55 mm bis 0,9 mm, oder von 0,6 mm bis 0,8 mm aufweisen. Ein Kontaktstift 30 mit einer derartigen Ausgestaltung einschließlich des daran vorgesehenen Formmerkmals oder der daran vorgesehenen Formmerkmale können effizient gefertigt werden, beispielsweise als Stanzteile. Der Kontaktstift 30 kann aus einem verzinnten Blech bestehen oder kann ein verzinntes Blech aufweisen.

Der Spulendraht 12 kann einen Drahtdurchmesser von 0,2 mm bis 0,5 mm aufweisen. Der Spulendraht 12 kann ein Kupferdraht mit einem Drahtdurchmesser von 0,2 mm bis 0,5 mm sein.

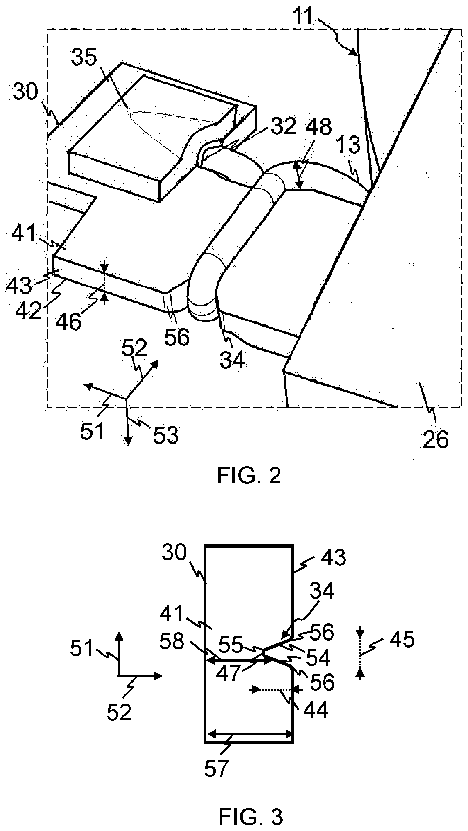

Unter Bezugnahme auf Figur 2 bis Figur 5 werden verschiedene Ausgestaltungen des Kontaktstifts 30 des Magnetventils 10 beschrieben. Die jeweils beschriebenen Ausgestaltungsmerkmale können auch bei dem weiteren Kontaktstift 30' vorliegen.

Figur 2 zeigt eine perspektivische Teilansicht des Magnetventils 10 nach einem Ausführungsbeispiel. Der Kontaktstift 30 erstreckt sich entlang einer Erstreckungsrichtung 51 bis zu dem in Figur 2 nicht mehr dargestellten Anschlussbereich 31. Die Erstreckungsrichtung 51 kann definiert sein durch diejenige Richtung, entlang der der Kontaktstift 30 an einem Ende den Anschlussbereich 31 aufweist und/oder entlang der der Kontaktstift 30 seine maximale Ausdehnung aufweist. Der Kontaktstift 30 ist an dem zum Anschlussbereich entgegengesetzten Basisende an einem Träger 26 befestigt. Der Träger 26 kann beispielsweise einstückig oder fest verbunden mit dem Spulenträger 15 oder dem Gehäuse 20 des Magnetventils 10 sein. Der Kontaktstift 30 ist als Blechteil, beispielsweise als Stanzteil, ausgebildet. Der Kontaktstift 30 weist eine erste Hauptfläche 41 und zweite Hauptfläche 42 auf, die entgegengesetzt zur ersten Hauptfläche 41 angeordnet ist. Eine Seitenfläche 43 erstreckt sich entlang der Erstreckungsrichtung 51 und zwischen der ersten Hauptfläche 41 und der zweiten Hauptfläche 42. Als Hauptflächen des Kontaktstifts 30 werden gemäß herkömmlicher Terminologie die beiden zueinander parallelen, größten, im Wesentlichen ebenen Flächen des Kontaktstifts 30 verstanden. Als Seitenflächen werden Flächen entlang einer Dickenrichtung 53 verstanden.

Entlang der senkrecht zur ersten Hauptfläche 41 und zur zweiten Hauptfläche 42 stehenden Dickenrichtung 53 weist der Kontaktstift 30 eine Blechdicke 46 auf. Die Blechdicke kann vorteilhaft von 0,5 mm bis 10,0 mm, von 0,55 mm bis 0,9 mm, oder von 0,6 mm bis 0,8 mm betragen.

Das Magnetventil 10 kann eine Überdeckung 35 für den Spulendraht 12 aufweisen. Die Überdeckung 35 kann den Spulendraht 12 beispielsweise an der Schweißzone 32 überdecken. Die Überdeckung 35 kann einstückig mit dem Kontaktstift 30 ausgebildet sein.

Der Kontaktstift 30 weist das nutförmige Formmerkmal 34 wenigstens entlang der Seitenfläche 43 auf, die sich zwischen den (flächenmäßig größeren) Hauptflächen 41, 42 erstreckt. Optional kann wenigstens ein weiteres nutförmiges Formmerkmal zum formschlüssigen Abstützen des Spulendrahts 12 an der der Seitenfläche 43 entgegengesetzten weiteren Seitenfläche des Kontaktstifts 30 vorhanden sein. Das wenigstens eine Formmerkmal 34 zum formschlüssigen Abstützen des Spulendrahts 12 im Endabschnitt 13 führt dazu, dass eine Breite des Kontaktstifts 30, die entlang einer Breitenrichtung 52 definiert ist, als Funktion einer Position erlang der Erstreckungsrichtung 51 jedenfalls dort veränderlich ist, wo das wenigstens eine Formmerkmal 34 an dem Kontaktstift 30 vorgesehen ist. Die Breite kann insbesondere eine nichtmonotone Veränderung aufweisen, um das Risiko einer Verschiebung des Spulendrahts 12 entlang der Erstreckungsrichtung 51 durch formschlüssige Abstützung zu reduzieren oder zu unterbinden.

Der Spulendraht 13 weist einen Drahtdurchmesser 48 auf. Der Drahtdurchmesser 48 kann vorteilhaft von 0,2 mm bis 0,5 mm betragen. Das nutförmige Formmerkmal 34 weist Abmessungen auf, die auf den Drahtdurchmesser 48 derart abgestimmt sind, dass das nutförmige Formmerkmal 34 den Spulendraht 12 in seinem Endabschnitt 13 formschlüssig abstützt, und zwar in wenigstens einem von der Schweißzone 32 beabstandeten Bereich des Kontaktstifts 30. Dazu kann das nutförmige Formmerkmale 34 beispielsweise eine Tiefe und/oder eine Breite aufweisen, die es ermöglichen, dass der Draht vollständig durch das nutförmige Formmerkmal 34 geführt werden kann, ohne über eine durch die Seitenfläche 34 definierte Ebene hinauszustehen.

Das nutförmige Formmerkmal 34 kann wenigstens eine abgefaste und/oder gekrümmte Übergangsfläche 56 aufweisen, um scharfe Kanten in der Umgebung des Spulendrahts 12 zu reduzieren oder zu vermeiden. Dadurch kann das Bruchrisiko weiter verringert werden.

Figur 3 zeigt eine Draufsicht des Kontaktstifts 30 des Magnetventils 10 nach einem Ausführungsbeispiel. Die Fixieranordnung weist wenigstens eine nutförmiges Formmerkmal 34 an der Seitenfläche 43 auf. Das nutförmige Formmerkmal 34 ist so dimensioniert, dass im Magnetventil 10 der Spulendraht 12 durch die Vertiefung 34 geführt und von dieser formschlüssig abgestützt wird. Das nutförmige Formmerkmal 34 weist wenigstens eine Nut auf. Die Nut erstreckt sich von einer durch die Seitenfläche 43 definierten Ebene. Die Nut kann kerbenförmig sein. Das nutförmige Formmerkmal weist zwei gegeneinander geneigte Nut-Begrenzungsflächen 54 auf, die sich in die Hauptflächen 41, 42 hinein erstrecken. Die Nut-Begrenzungsflächen 54 können jeweils im Wesentlichen eben sein. Die Nut-Begrenzungsflächen 54 können parallel zur Dickenrichtung 53 sein. Das nutförmige Formmerkmal 34 kann ein oder mehrere Übergangsflächen aufweisen, die abgefast oder gekrümmt sein können, um das Risiko einer Schwächung des Spulendrahts 34 in Anlage mit dem Kontaktstift 30 weiter zu verringern.

Das nutförmige Formmerkmal 34 zum formschlüssigen Abstützen des Spulendrahts 12 im Endabschnitt 13 führt dazu, dass eine Breite des Kontaktstifts 30, die entlang einer Breitenrichtung 52 definiert ist, als Funktion einer Position erlang der Erstreckungsrichtung 51 jedenfalls dort veränderlich ist, wo das wenigstens eine Formmerkmal 34 an dem Kontaktstift 30 vorgesehen ist. Dies ist in Figur 3 beispielhaft für eine Kontaktstiftbreite 57 und eine weitere Kontaktstiftbreite 58 dargestellt.

Das nutförmige Formmerkmal 34 kann vorteilhaft eine die Nut-Begrenzungsflächen 54 verbindende Übergangsfläche 55 aufweisen. Die Übergangsfläche 55 kann gekrümmt sein, beispielsweise in Form eines Segments einer Zylinderoberfläche, deren Mittelachse parallel zur Dickenrichtung 53 ist. Alternativ oder zusätzlich kann das nutförmige Formmerkmal 34 weitere Übergangsflächen 56 aufweisen, die jeweils eine der Nut-Begrenzungsflächen 54 mit einem ebenen Abschnitt der Seitenfläche 43 verbindet. Die weiteren Übergangsflächen 56 können betragsmäßig gleiche, aber voneinander verschieden gerichtete Krümmungsradien aufweisen, um jeweils eine der Nut-Begrenzungsflächen 54 mit einem ebenen Abschnitt der Seitenfläche 43 zu verbinden. Die weiteren Übergangsflächen 56 können jeweils gekrümmt sein, beispielsweise in Form eines Segments einer Zylinderoberfläche, wobei die Mittelachse der Zylindersegmentoberfläche parallel zur Dickenrichtung 53 ist.

Das nutförmige Formmerkmal 34 kann weitere abgefaste oder gekrümmte Übergangsflächen aufweisen, beispielsweise um einen glatten Übergang des nutförmigen Formmerkmals 34 in die Hauptfläche 41 und die weitere Hauptfläche 42 zu bilden.

Das nutförmige Formmerkmal 34 weist eine Nuttiefe 44 und eine Nutbreite 45 auf. Die Nuttiefe 44 kann definiert sein als Abstand eines von der durch die Seitenfläche 43 definierten Ebene am weitesten entfernten Punkts des nutförmigen Formmerkmals 34. Die Nutbreite 45 kann definiert sein als entlang der Erstreckungsrichtung 51 gemessener maximaler Abstand zwischen einem ersten, sich parallel zur Dickenrichtung 53 erstreckenden Rands des nutförmigen Formmerkmals 34 und einem zweiten, sich ebenfalls parallel zur Dickenrichtung 53 ersteckenden Rands des nutförmigen Formmerkmals 34. Die Nuttiefe 44 und die Nutbreite 45 können jeweils gleich oder größer sein als der Drahtdurchmesser 48.. Die Nuttiefe 44, die Nutbreite 45 und ein Winkel zwischen den Nut-Begrenzungsflächen 54 kann so gewählt sein, dass der Spulendraht 12 so durch das nutförmige Formmerkmal 54 geführt werden kann, dass er nicht über eine durch die Seitenfläche 43 definierte Ebene nach außen aus dem nutförmigen Formmerkmal 34 herausragt. Auf diese Weise kann eine besonders zuverlässige formschlüssige Abstützung erreicht werden.

Die Fixieranordnung kann mehrere am Kontaktstift 30 ausgebildete Formmerkmale zum formschlüssigen Abstützen des Spulendrahts 12 aufweisen. Die mehreren Formmerkmale können mehrere entlang einer gleichen Seitenfläche 43 und/oder mehrere an unterschiedlichen Seitenflächen des Kontaktstifts 30 ausgebildete Formmerkmale aufweisen, die jeweils dimensioniert und angeordnet sind, um den Spulendraht 12 formschlüssig abzustützen.

Figur 4 zeigt eine Ausgestaltung des Kontaktstifts 30, bei der der Kontaktstift eine erste Reihe von mehreren Nuten 61 und eine zweite Reihe von mehreren Nuten 62 aufweist. Die erste Reihe von mehreren Nuten 61 ist in der Seitenfläche 43 ausgebildet. Die zweite Reihe von mehreren Nuten 62 ist in einer weiteren Seitenfläche 49 ausgebildet. Jede der Nuten 34 der ersten und/oder zweiten Reihe von Nuten 61, 62 kann eine Ausgestaltung aufweisen, wie sie beispielsweise unter Bezugnahme auf Figur 2 und Figur 3 beschrieben wurde.

Der Spulendraht 12 ist in seinem Endabschnitt 13 so um den Kontaktstift 30 gewickelt, dass er diesen entlang einer schraubenlinienartig Bahn mehrfach umläuft. Der Spulendraht 12 wird dabei von einer oder vorteilhaft von mehreren Nuten der ersten Reihe von mehreren Nuten 61 am Kontaktstift 30 formschlüssig abgestützt. Der Spulendraht 12 wird darüber hinaus von einer oder vorteilhaft von mehreren Nuten der zweiten Reihe von mehreren Nuten 62 am Kontaktstift 30 formschlüssig abgestützt.

Die Fixieranordnung kann nicht nur Vertiefungen relativ zu einer Ebene der Seitenfläche 43 des Kontaktstifts 30. Alternativ oder zusätzlich kann die Fixieranordnung wenigstens einen Vorsprung und vorteilhaft wenigstens ein Paar von Vorsprüngen aufweisen, um den Spulendraht 12 in seinem Endabschnitt 13 formschlüssig abzustützen.

Figur 5 ist eine schematische Draufsicht einer weiteren Ausgestaltung des Kontaktstifts 30. Die Fixieranordnung weist ein Formmerkmal auf, das einen Vorsprung 63 und einen weiteren Vorsprung 64 aufweist. Der Vorsprung 64 und der weitere Vorsprung 64 können eingerichtet sein, den Spulendraht 12 jedenfalls formschlüssig am Kontaktstift 30 so abzustützen, dass das Risiko einer Relativbewegung zwischen dem Spulendraht 12 und der Seitenfläche 43 entlang der Erstreckungsrichtung 51 verringert wird. Der Vorsprung 63 und der weitere Vorsprung 64 sind so angeordnet, dass der Spulendraht 12 durch den zwischen dem Vorsprung 63 und dem weiteren Vorsprung 64 definierten Zwischenraum geführt werden kann. Der Vorsprung 63 und der weitere Vorsprung 64 können jeweils abgefaste oder gekrümmte Oberflächenbereiche aufweisen, um scharfe Kanten in einer Nähe des Spulendrahts 12 zu reduzieren oder zu eliminieren.

Die Fixieranordnung, die den Vorsprung 63 und den weiteren Vorsprung 64 aufweist, kann auf den Spulendraht 12 abgestimmt sein. Insbesondere kann eine Höhe 66 des Vorsprungs 63 und des weiteren Vorsprungs 64 so gewählt sein, dass sie gleich oder größer als der Drahtdurchmesser 48 ist. Die Höhe 66 kann dabei bestimmt sein als die Entfernung, um die der Vorsprung 63 und der weitere Vorsprung 64 entlang der Breitenrichtung 52 relativ zu einer von der Seitenfläche 43 definierten Ebene absteht. Ein Abstand 65 zwischen dem Vorsprung 63 und dem weiteren Vorsprung 64 kann so gewählt sein, dass er gleich oder größer als der Drahtdurchmesser ist. Der Abstand 65 kann dabei definiert sein als Abstand von zueinander parallelen, einander zugewandten Oberflächen des Vorsprungs 63 und des weiteren Vorsprungs, wobei der Abstand entlang der Erstreckungsrichtung gemessen wird. Der Abstand 65 kann einer lichten Weite des Zwischenraums zwischen dem Vorsprung 63 und dem weiteren Vorsprung 64 entsprechen.

Die unter Bezugnahme auf Figur 2 bis Figur 5 erläuterten Ausgestaltungsmerkmale des Kontaktstifts 30 und deren Wechselwirkung mit dem Endabschnitt 13 können entsprechend für den weiteren Kontaktstift 30' und die Anordnung des weiteren Endabschnitts 14 in Bezug auf den weiteren Kontaktstift 30' eingesetzt werden. Es ist nicht erforderlich, dass die Kontaktstifte 30, 30' eine identische Ausgestaltung aufweisen. Es ist vorteilhaft, aber nicht zwangsläufig erforderlich, dass jeder der Kontaktstifte, an dem ein Endabschnitt des Spulendrahts durch eine Schweißverbindung befestigt und um den der Spulendraht schraubenlinienartig gewickelt ist, wenigstens ein Formmerkmal zum formschlüssigen Abstützen des Spulendrahts aufweist.

Während Figur 1 ein 2/2-Wege-Ventil zeigt, kann eine Fahrzeugkomponente nach einem Ausführungsbeispiel auch ein Magnetventil mit einer anderen Anzahl von Anschlüssen und/oder Ventilstellungen aufweisen.

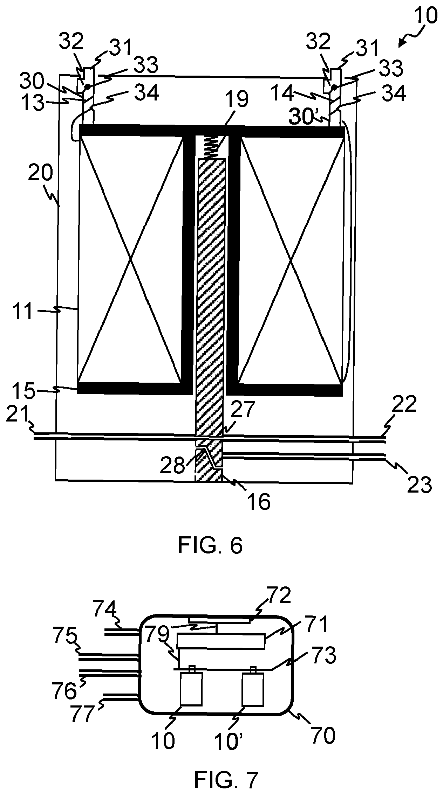

Figur 6 zeigt beispielhaft eine Fahrzeugkomponente in Form eines Magnetventils 10, das als 3/2-Wege-Ventil ausgebildet ist. Das Magnetventil 10 weist einen Kontaktstift 30 und eine Fixieranordnung auf, die ein Formmerkmal 34 des Kontaktstifts 30 aufweist und eingerichtet ist, einen Endabschnitt 13 des Spulendrahts formschlüssig am Kontaktstift 30 abzustützen. Das Magnetventil 10 weist einen weiteren Kontaktstift 30' auf, wobei die Fixieranordnung ein weiteres Formmerkmal 34 des weiteren Kontaktstifts 30' aufweist und eingerichtet ist, einen Endabschnitt 14 des Spulendrahts formschlüssig am weiteren Kontaktstift 30' abzustützen. Die formschlüssige Abstützung erfolgt dabei jeweils in einem von der Schweißzone 32 beabstandeten Bereich des Kontaktstifts 30 oder des weiteren Kontaktstifts 30'.

Das Magnetventil 30 weist einen ersten Anschluss 21, einen zweiten Anschluss 22 und einen dritten Anschluss 23 auf. Fluidpassagen 27, 28 im Dichtkörper 16 sind derart angeordnet und eingerichtet, dass in einer ersten Ventilstellung der erste Anschluss 21 mit dem zweiten Anschluss 22 über eine erste Fluidpassage 27 des Magnetventils 10 fluidisch verbunden ist, während der dritte Anschluss 23 abgedichtet ist. Das Magnetventil ist derart eingerichtet, dass in einer zweiten Ventilstellung der erste Anschluss 21 mit dem dritten Anschluss 23 über eine zweite Fluidpassage 28 des Magnetventils 10 fluidisch verbunden ist, während der zweite Anschluss 22 abgedichtet ist. Durch Energetisierung der Spule 11 kann das Magnetventil zwischen der ersten und der zweiten Ventilstellung umgestellt werden.

Die Fahrzeugkomponente kann zusätzlich zu dem Magnetventil 10 oder zu mehreren Magnetventilen 10 weitere Komponenten aufweisen. Die Fahrzeugkomponente kann insbesondere als Fahrzeugkomponente eines elektropneumatischen Fahrzeugsystems ausgestaltet sein. Fahrzeugkomponenten, die ein oder mehrere Magnetventile 10 mit einer Ausgestaltung nach einer Ausführungsform oder einem Ausführungsbeispiel aufweisen, werden unter Bezugnahme auf Figur 7 bis Figur 16 beschrieben.

Figur 7 zeigt eine schematische Darstellung einer Fahrzeugkomponente, die als elektropneumatisches Steuergerät 70 ausgebildet ist. Das elektropneumatische Steuergerät 70 weist eine Steuerelektronik 71, eine elektronische Schnittstelle 72 und ein Magnetventil 10 oder mehrere Magnetventile 10, 10' auf. Das Magnetventil 10 oder die Magnetventile 10, 10' weisen ein oder mehrere Magnetventile mit einer Ausgestaltung auf, wie sie beispielsweise unter Bezugnahme auf Figur 1 bis Figur 6 beschrieben wurde und/oder in den Ansprüchen definiert ist.

Das Magnetventil 10 oder die Magnetventile 10, 10' können über elektrisch leitende Verbindungen, die an einer Leiterplatte 73 ausgebildet sein können, elektrisch leitend mit der Steuerelektronik 71 verbunden. Die Steuerelektronik 71 ist eingerichtet, um abhängig von an der elektronische Schnittstelle 72 empfangenen Eingangssignalen und/oder Eingangsdaten die Spulen 11 wenigstens eines Magnetventils 10, 10' mit Strom zu versorgen, um die Ventilstellung zu ändern. Die elektronische Schnittstelle 71 kann als Busschnittstelle zur Verbindung mit einem Fahrzeugbus ausgestaltet sein. Das elektropneumatische Steuergerät 70 weist

Das elektropneumatische Steuergerät 70 weist einen Drucklufteingang 74 auf, der für eine unmittelbare oder mittelbare Kopplung mit einer Druckluftquelle eingerichtet ist. Das elektropneumatische Steuergerät 70 weist einen Verbraucherausgang 75 auf, der eingerichtet ist, Druckluft an einen pneumatischen Verbraucher auszugeben und/oder Druckluft von dem pneumatischen Verbraucher zu empfangen. Der Verbraucherausgang 75 kann mittelbar oder unmittelbar mit dem pneumatischen Verbraucher gekoppelt sein. Das elektropneumatische Steuergerät 70 kann eine Entlüftungsöffnung 77 aufweisen, um den pneumatischen Verbraucher über das elektropneumatische Steuergerät in kontrollierter Weise zu entlüften. Die Steuerelektronik 71 kann eingerichtet sein, einen Zustand wenigstens eines oder mehrere der Magnetventile 10, 10' so zu steuern, dass selektiv dem pneumatischen Verbraucher über das elektropneumatische Steuergerät 70 Druckluft zugeführt oder der pneumatische Verbraucher über das elektropneumatische Steuergerät 70 entlüftet werden kann.

Das elektropneumatische Steuergerät 70 kann zur Druckluftversorgung und/oder Entlüftung mehrerer pneumatischer Verbraucher eingerichtet sein. Dazu kann das elektropneumatische Steuergerät 70 wenigstens einen weiteren Verbraucherausgang 76 aufweisen, der eingerichtet ist, Druckluft an wenigstens einen weiteren pneumatischen Verbraucher auszugeben und/oder Druckluft von dem wenigstens einen weiteren pneumatischen Verbraucher zu empfangen. Der wenigsten eine weitere Verbraucherausgang 76 kann mittelbar oder unmittelbar mit dem wenigstens einen weiteren pneumatischen Verbraucher gekoppelt sein.

Das elektropneumatische Steuergerät 70 weist ein reduziertes Risiko auf, dass es aufgrund eines Drahtbruchs eines Spulendrahts eines Magnetventils ausfällt und/oder gewartet werden muss.

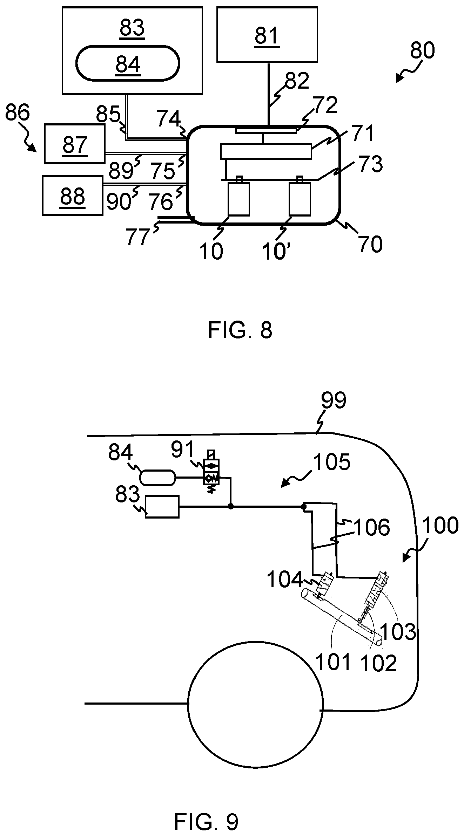

Figur 8 ist eine schematische Darstellung eines elektropneumatischen Fahrzeugsystems 80. Das elektropneumatische Fahrzeugsystem 80 weist das elektropneumatische Steuergerät 70 auf. Das elektropneumatische Fahrzeugsystem 80 weist eine Steuereinheit 81 auf, die mit der elektronischen Schnittstelle 72 über eine Signal- oder Datenverbindung 82 gekoppelt ist. Die Steuereinheit 81 kann eingerichtet sein, abhängig von Nutzereingaben und/oder mit einem oder mehreren Sensoren erfassten Messwerten Signale oder Daten an das elektropneumatische Steuergerät 70 bereitzustellen. Das elektropneumatische Steuergerät 70 kann eingerichtet sein, abhängig von den von der Steuereinheit empfangenen Signalen oder Daten wenigstens eines der Magnetventile 10, 10' anzusteuern. Das elektropneumatische Steuergerät 70 kann eingerichtet sein, abhängig von den von der Steuereinheit empfangenen Signalen oder Daten einem Luftverbraucher 87 des elektropneumatischen Fahrzeugsystems 80 Druckluft zuzuführen oder diesen zu entlüften und/oder einem weiteren Luftverbraucher 88 des elektropneumatischen Fahrzeugsystems 80 Druckluft zuzuführen oder diesen zu entlüften. Das elektropneumatische Fahrzeugsystem weist eine Druckgasversorgungsanlage 83 auf, um das elektropneumatische Steuergerät 70 mit Druckluft zu versorgen. Die Druckgasversorgungsanlage 83 kann ein Druckgasspeicher 84 aufweisen.

Das elektropneumatische Fahrzeugsystem 80 weist ein pneumatisches Leitungssystem auf. Das pneumatische Leitungssystem weist eine Versorgungsleitung 85 auf, die mit der Druckgasversorgungsanlage 83 und dem elektropneumatischen Steuergerät 70 verbunden ist und über die das elektropneumatische Steuergerät 70 Druckluft am Druckgaseinfang 74 empfangen kann. Das pneumatische Leitungssystem weist eine Verbraucherleitung 89 auf, die mit dem pneumatischen Verbraucher 87 und dem elektropneumatischen Steuergerät 70 verbunden ist, um den pneumatischen Verbraucher 87 mit Druckgas zu versorgen und/oder zu entlüften. Das pneumatische Leitungssystem kann eine weitere Verbraucherleitung 90 auf, die mit dem wenigstens einen weiteren pneumatischen Verbraucher 88 und dem elektropneumatischen Steuergerät 70 verbunden ist, um den wenigstens einen weiteren pneumatischen Verbraucher 88 mit Druckgas zu versorgen und/oder zu entlüften.

Das elektropneumatische Fahrzeugsystem 80 kann ein elektropneumatisches Getriebesystem, ein elektropneumatisches Kupplungssystem, ein elektropneumatisches Bremssystem, ein Luftaufbereitungssystem, ein elektropneumatisches Nivellierungssystem, ein elektropneumatisches Luftfedersystem und/oder ein elektropneumatisches Bremssystem aufweisen.

Das elektropneumatische Fahrzeugsystem 80 weist ein reduziertes Risiko auf, dass es aufgrund eines Drahtbruchs eines Spulendrahts eines Magnetventils ausfällt und/oder gewartet werden muss.

Figur 9 ist eine schematische Darstellung eines Kraftfahrzeugs 99 mit einem elektropneumatischen Fahrzeugsystem, das ein pneumatisches Getriebeschaltsystem 100 aufweist. Das pneumatische Getriebeschaltsystem 100 weist eine Schaltwelle 101 sowie mehrere mit dieser funktional gekoppelte Ventile auf, die ein 3/2-Wege-Ventil 103, ein 3/3-Wege-Ventil 104 und/oder ein Gassensperrventil 102 aufweisen können. Wenigstens eines der Ventile 102, 103, 104 des Getriebeschaltsystems 100 sind über Zufuhrverbindungen 105, 106 mit einer Druckgasversorgungsanlage 83 und/oder einem Druckgasspeicher 84 verbunden, um mit Druckluft versorgt zu werden. Wenigstens eines der Ventile 102, 103, 104 des Getriebeschaltsystems 100 weist ein Magnetventil 10 auf, bei dem eine Fixieranordnung einen Spulendraht des Magnetventils 10 formschlüssig an einem Kontaktstift abstützt, um das Bruchrisiko des Spulendrahts zu verringern. Alternativ oder zusätzlich kann ein steuerbares Ventil 91, das zwischen den Druckgasspeicher 84 oder die Luftversorgungsanlage 83 und die Ventile 102, 103, 104 gekoppelt ist, ein Magnetventil 10 aufweisen, bei dem eine Fixieranordnung einen Spulendraht des Magnetventils 10 formschlüssig an einem Kontaktstift abstützt, um das Bruchrisiko des Spulendrahts zu verringern. Das pneumatische Getriebeschaltsystem 100 weist ein reduziertes Risiko auf, dass es aufgrund eines Drahtbruchs eines Spulendrahts eines Magnetventils ausfällt und/oder gewartet werden muss.

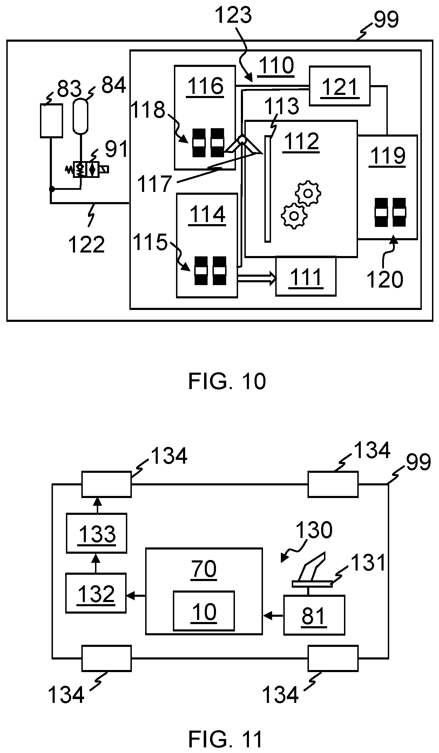

Figur 10 ist eine schematische Darstellung eines Kraftfahrzeugs 99, das ein automatisches Schaltgetriebe 110 aufweist. Das automatische Schaltgetriebe 110 weist ein Getriebe 112 mit einer Getriebeschaltstange 113, eine Kupplung 111, die mit dem Getriebe 112 gekoppelt ist, eine Auswahleinrichtung 114, eine Gangwechseleinrichtung 115 und einen Getriebesteller 119 auf. Das automatische Schaltgetriebe 110 weist eine oder mehrere elektronische Steuereinheiten 121 auf, die eingerichtet sind, die Auswahleinrichtung 114, die Gangwechseleinrichtung 115 und/oder den Getriebesteller 119 zu steuern. Das automatische Schaltgetriebe 110 wird über eine Versorgungsleitung 122 von einer Druckluftversorgungsanlage 83 und/oder einem Druckgasspeicher 84 mit Druckluft versorgt. Ein steuerbares Ventil 91 kann ansteuerbar sein, um die Versorgung zu steuern oder zu regeln.

Das Getriebe 112 stellt mehrere Gänge bereit. Die Getriebeschaltstange 113 ermöglicht ein Umschalten zwischen verschiedenen Gängen. Die Kupplung 111 ist mit dem Getriebe 112 gekoppelt und ermöglicht das Einkuppeln und Auskuppeln. Dies geschieht durch den Einsatz der Auswahleinrichtung 114, die einen 2-Stellungs-Zylinder aufweisen kann. Die Auswahleinrichtung 114 ist eingerichtet, Druckluft an die Kupplung 111 zum Einkuppeln und Auskuppeln bereitzustellen. Die Auswahleinrichtung 114 kann eine erste Mehrzahl von Magnetventilen 115 aufweisen, beispielsweise zwei oder vier Magnetventile, die einen 2-StellungsZylinder zwischen zwei verschiedenen Funktionsstellungen bewegen.

Die Gangwechseleinrichtung 115 kann einen 3-Stellungs-Zylinder aufweisen. Die Gangwechseleinrichtung 115 kann eingerichtet sein, zwischen Vorwärts-, Rückwärts- und Neutralpositionen zu wechseln. Hierzu kann die Gangwechseleinrichtung 115 über einen Hebel 117 auf die Getriebeschaltstange 113 einwirken. Zum Verstellen des 3-Stellungs-Zylinders kann die Gangwechseleinrichtung 115 eine zweite Mehrzahl von Magnetventilen 116 aufweisen, beispielsweise vier Magnetventile.

Der Getriebesteller 119 kann eingerichtet sein, die tatsächliche Schaltung des Getriebes 112 zu steuern. Der Getriebesteller 119 kann eine dritte Mehrzahl von Magnetventilen 120 aufweisen.

Das automatische Schaltgetriebe 110 weist wenigstens eine elektronische Steuereinrichtung 121 zum Steuern der Auswahleinrichtung 114, der Gangwechseleinrichtung 115 und des Getriebestellers 119 auf. Die Steuereinrichtung 119 kann baulich in eine dieser Einrichtungen integriert sein, beispielsweise in die Auswahleinrichtung 114.

Diese verschiedenen Komponenten des automatischen Schaltgetriebesystems 110 wirken zusammen, um ein effizientes und zuverlässiges Schalten des Getriebes 112 zu gewährleisten. Die elektronischen Steuereinheit(en) 121 sorgt oder sorgen für eine präzise Steuerung der einzelnen Komponenten.

Wenigstens eines und vorteilhaft alle Magnetventile der ersten Mehrzahl von Magnetventilen 115, der zweiten Mehrzahl von Magnetventilen 118 und/oder der dritten Mehrzahl von Magnetventilen 119 weisen eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das automatische Schaltgetriebe110 weist ein reduziertes Risiko auf, dass es aufgrund eines Drahtbruchs eines Spulendrahts eines Magnetventils ausfällt und/oder gewartet werden muss.

Figur 11 ist eine schematische Darstellung eines Kraftfahrzeugs 99, das ein pneumatisches Handbremssystem 130 aufweist. Das pneumatische Handbremssystem 130 weist eine Betätigungseinrichtung 131, eine Steuereinheit 81, ein elektropneumatisches Steuergerät 70, einen Bremszylinder 132 und eine Feststellbremse 133 auf, die von dem Bremszylinder 132 betätigt wird und auf ein Rad 134 einwirkt. Die Betätigungseinrichtung 131 kann beispielsweise einen Griff oder eine andere mechanisch betätigbare Vorrichtung aufweisen. Das pneumatische Handbremssystem 130 ist so eingerichtet, dass durch eine mechanische Betätigung der Betätigungseinrichtung 131 das pneumatische Handbremssystem 130 aktiviert wird. Die Steuereinheit 81 erzeugt abhängig von einer Betätigung der Betätigungseinrichtung 131 ein Signal oder Befehlsdaten für das elektropneumatische Steuergerät 70. Das elektropneumatische Steuergerät 70 weist wenigstens ein Magnetventil 10 auf und ist eingerichtet, das wenigstens eine Magnetventil 10 abhängig von dem von der Steuereinheit 81 empfangenen Signal oder den von der Steuereinheit 81 empfangenen Befehlsdaten mit Strom zu beaufschlagen. Ein über das Magnetventil 10 bereitgestellter Ausgangsdruck des elektropneumatischen Steuergeräts 70 wird dem Bremszylinder 132 zugeführt. Ausgelöst durch eine Betätigung der Betätigungseinrichtung 131 stellt das elektropneumatische Steuergerät 70 Druck bereit, der den Bremszylinder 132 betätigt. Der Bremszylinder 132 wiederum wirkt auf die Feststellbremse 133 ein, die auf ein Rad 134 wirkt. Die Betätigung des Bremszylinders 132 aktiviert die Feststellbremse 133.

Das pneumatische Handbremssystem 130 ist so ausgestaltet, dass durch den pneumatischen Druckmechanismus eine zuverlässige und stabile Bremswirkung erzeugt, die bei Bedarf schnell aktiviert werden kann.

Das Magnetventil 10 weist eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das pneumatische Handbremssystem 130 weist ein reduziertes Risiko auf, dass es aufgrund eines Drahtbruchs eines Spulendrahts eines Magnetventils ausfällt und/oder gewartet werden muss.

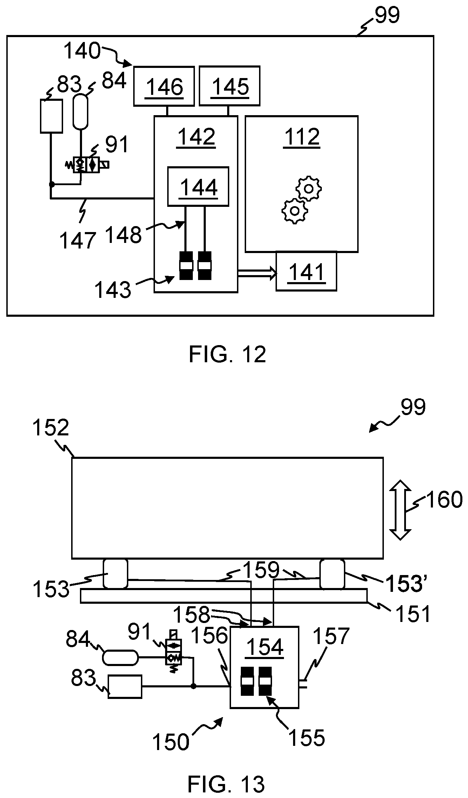

Figur 12 ist eine schematische Darstellung eines Kraftfahrzeugs 99, das ein elektropneumatisches Kupplungssystem 140 zum Betätigen einer pneumatisch betätigbaren Kupplung 141 zum Einkuppeln und Auskuppeln eines Getriebes 112 aufweist.

Das elektropneumatische Kupplungssystem 140 weist eine elektropneumatische Kupplungsbetätigungseinrichtung 142 auf. Die elektropneumatische Kupplungsbetätigungseinrichtung 142 wird über eine pneumatische Versorgungsleitung 147 mit Druckluft versorgt. Die Druckluft kann durch eine Druckgasversorgungsanlage 83 und/oder einen Druckgasspeicher 84 bereitgestellt werden. Ein steuerbares Ventil 91 ist steuerbar, um die Druckgaszufuhr zu steuern oder zu regeln.

Die elektropneumatische Kupplungsbetätigungseinrichtung 142 weist eine elektronische Steuereinheit 144 auf und wenigstens ein Magnetventil oder mehrere Magnetventile 143 auf. Die elektronische Steuereinheit 144 ist über elektrische Verbindungen 148 mit dem Magnetventil oder den Magnetventilen 143 verbunden, um durch selektive Bestromung die Ventilstellung zu beeinflussen. Abhängig von der Ventilstellung stellt die elektropneumatische Kupplungsbetätigungseinrichtung 142 Druckgas an die Kupplung 141 bereit, um ein Einkuppeln oder Auskuppeln zu bewirken. Die elektronische Steuereinheit 144 kann eingerichtet sein, das Magnetventil oder die Magnetventile 143 abhängig von Signalen oder Daten anzusteuern, die sie von einem oder mehreren Sensoren 146 und/oder einem Steuergerät 145 empfängt.

Wenigstens eines und vorteilhaft alle Magnetventile 143 weisen eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das elektropneumatische Kupplungssystem 140 weist ein reduziertes Risiko auf, dass es aufgrund eines Drahtbruchs eines Spulendrahts eines Magnetventils ausfällt und/oder gewartet werden muss.

Figur 13 ist eine schematische Darstellung eines Kraftfahrzeugs 99, das ein elektropneumatisches Kabinennivelliersystem 150 aufweist. Das elektropneumatische Kabinennivelliersystem 150 ist eingerichtet, eine Neigung einer Kabine 152 des Kraftfahrzeugs 99 relativ zu einem Fahrgestell 151 zu verändern. Das elektropneumatisches Kabinennivelliersystem 150 weist ein pneumatisches Einstellelement 153 und ein weiteres pneumatisches Einstellelement 153' auf, die jeweils zum Verstellen der Neigung der Kabine 152 eingerichtet sind. Das pneumatische Einstellelement 153 und das weitere pneumatische Einstellelement 153' können als aufblasbare Gassäcke ausgestaltet sein. Das elektropneumatisches Kabinennivelliersystem 150 weist eine elektropneumatische Steuereinrichtung 154 auf. Die elektropneumatische Steuereinrichtung 154 weist wenigstens zwei Magnetventile 155 auf. Die elektropneumatische Steuereinrichtung 154 ist eingerichtet, die wenigstens zwei Magnetventile 155 selektiv so zu bestromen, dass an einem Druckgaseingang 156 empfangene Druckluft einem oder beiden von dem pneumatischen Einstellelement 153 und dem weiteren pneumatischen Einstellelement 153' zugeführt werden kann und/oder dass eines oder beide von dem pneumatischen Einstellelement 153 und dem weiteren pneumatischen Einstellelement 153' über einen Entlüftungsöffnung 157 der elektropneumatischen Steuereinrichtung 154 entlüftet werden kann oder können. Die elektropneumatischen Steuereinrichtung 154 weist Druckgasausgänge 158 auf, von denen jeder mit jeweils einem der pneumatischen Einstellelemente 153, 153' über eine Verbindungsleitung 159 verbunden ist. Durch die genannte Funktion können unterschiedliche Bereiche der Kabine 152 entlang eines Verstellwegs 160 verstellt werden, um die Neigung so anzupassen, dass die Kabine 152 eine gewünschte Ausrichtung aufweist, beispielsweise auch bei Schrägstellung des Fahrwerks 151 senkrecht zu einer Schwerkraftrichtung ausgerichtet ist. Die Druckluftversorgung kann wie bereits erläutert erfolgen. Die Ansteuerung der Magnetventile 155 kann in an sich bekannter Weise abhängig von Signalen oder Daten erfolgen, die die elektropneumatische Steuereinrichtung 154 über Signal- oder Datenverbindungen von einer Steuereinheit und/oder Sensoren empfängt.

Wenigstens eines und vorteilhaft alle Magnetventile 155 weisen eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das Kabinennivelliersystem 150 weist ein reduziertes Risiko auf, dass es aufgrund eines Drahtbruchs eines Spulendrahts eines Magnetventils ausfällt und/oder gewartet werden muss.

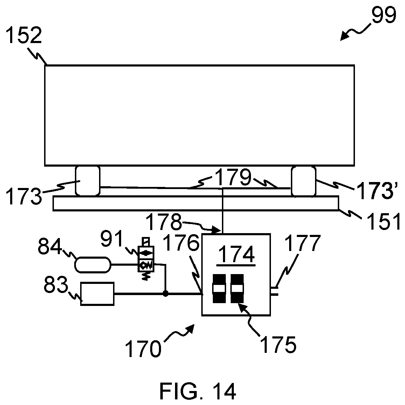

Figur 14 ist eine schematische Darstellung eines Kraftfahrzeugs 99, das ein elektropneumatisches Stoßdämpfersystem 170 aufweist. Das elektropneumatisches Stoßdämpfersystem 170 weist einen pneumatischen Stoßdämpfer 173 und einen weiteres pneumatischen Stoßdämpfer 173' auf, die jeweils zwischen einem Fahrgestell 151 und einer Kabine 152 angeordnet sind. Der pneumatische Stoßdämpfer 173 und der weitere pneumatische Stoßdämpfer 173' können als Gassäcke ausgestaltet sein, deren Druck einstellbar ist. Das elektropneumatisches Stoßdämpfersystem 170 weist eine elektropneumatische Steuereinrichtung 174 auf. Die elektropneumatische Steuereinrichtung 174 weist wenigstens ein Magnetventil oder mehrere Magnetventile 175 auf. Die elektropneumatische Steuereinrichtung 174 ist eingerichtet, die das wenigstens eine Magnetventil oder die mehreren Magnetventile 175 selektiv so zu bestromen, dass an einem Druckgaseingang 176 empfangene Druckluft dem pneumatischen Stoßdämpfer 173 und dem weiteren pneumatischen Stoßdämpfer 173' zugeführt werden kann und/oder dass der pneumatische Stoßdämpfer 173 und der weitere pneumatische Stoßdämpfer 173' über einen Entlüftungsöffnung 177 der elektropneumatischen Steuereinrichtung 174 entlüftet werden können. Die elektropneumatischen Steuereinrichtung 174 weist einen Druckgasausgang 178 auf, der über eine Verbindungsleitung 179 mit dem pneumatischen Stoßdämpfer 173 und dem weiteren pneumatischen Stoßdämpfer 173' verbunden ist. Durch die genannte Funktion kann ein Druck in den Stoßdämpfern 173, 173' gesteuert oder geregelt werden. Die Druckluftversorgung kann wie bereits erläutert erfolgen. Die Ansteuerung des wenigstens einen Magnetventils oder der mehreren Magnetventile 175 kann in an sich bekannter Weise abhängig von Signalen oder Daten erfolgen, die die elektropneumatische Steuereinrichtung 174 über Signal- oder Datenverbindungen von einer Steuereinheit und/oder Sensoren empfängt.

Wenigstens eines und vorteilhaft alle Magnetventile 175 weisen eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das Stoßdämpfersystem 170 weist ein reduziertes Risiko auf, dass es aufgrund eines Drahtbruchs eines Spulendrahts eines Magnetventils ausfällt und/oder gewartet werden muss.

Nach weiteren Ausführungsbeispielen werden Modulatoren bereitgestellt, die wenigstens ein Magnetventil aufweisen, wie es hier detailliert beschrieben wurde. Modulatoren nach Ausführungsbeispielen können in verschiedener Weise eingesetzt werden, beispielsweise als Modulator zum Versorgen von Bremszylindern einer Vorderachse oder als Hinterachsmodulator. Modulatoren nach Ausführungsbeispielen können insbesondere in pneumatischen Bremssystemen von Nutzfahrzeugen eingesetzt werden, vorteilhaft auch in pneumatischen Bremssystemen, die ein elektronisches Bremssystem (EBS) aufweisen.

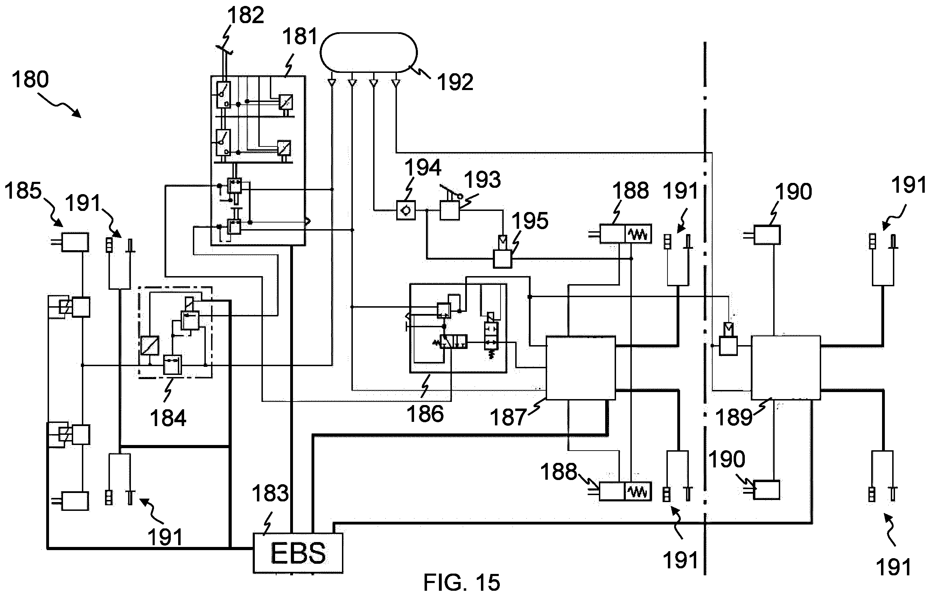

Figur 15 zeigt in einer schematischen Darstellung ein als Bremssystem 180 ausgestaltetes elektropneumatisches Fahrzeugsystem. Das Bremssystem 180 weist einen Bremswertgeber 181 auf. Ein Betätigungselement 182, beispielsweise ein Pedal, kann am Bremswertgeber 181 angeordnet oder damit gekoppelt sein. Ein EBS 183 kann mit dem Bremswertgeber 181 gekoppelt sein, um beispielsweise abhängig von mit Sensoren 191 erfassten Sensorsignalen oder Sensordaten Befehle für den Bremswertgeber 181 und/oder die Modulatoren 184, 187, 189 zu erzeugen.

Das Bremssystem weist mehrere Modulatoren 184, 187, 189 auf, die jeweils eingerichtet sind, einen Steuerdruck in einen Druck in einem Arbeitskreis umzusetzen. Der Modulator 184 kann eingerichtet und verbunden sein, einen Druck in Bremszylindern 185 einer Vorderachse durch Verbindung mit einer DruckgasQuelle zu erhöhen oder durch Entlüften zu verringern. Alternativ oder zusätzlich kann ein Modulator 187 vorgesehen sein, der als Hinterachsmodulator ausgestaltet ist und eingerichtet und verbunden ist, einen Druck in Bremszylindern 188 einer Hinterachse separat zu beeinflussen. Alternativ oder zusätzlich kann ein Modulator 189 vorgesehen sein, der als weiterer Hinterachsmodulator ausgestaltet ist und eingerichtet und verbunden ist, einen Druck in weiteren Bremszylindern 190 einer weiteren Hinterachse separat zu beeinflussen. Eine, mehrere oder alle der Modulatoren 184, 187, 189 können wenigstens ein Magnetventil aufweisen, das eine Spule und einen Kontaktstift aufweist, wobei ein Formmerkmal des Kontaktstifts den Spulendraht in einem Endabschnitt des Spulendrahts formschlüssig am Kontaktstift abstützt. Das Bremssystem 180 weist ein reduziertes Risiko auf, dass es aufgrund eines Drahtbruchs eines Spulendrahts eines Magnetventils ausfällt und/oder gewartet werden muss.

Das Bremssystem kann weitere, an sich bekannte Komponenten aufweisen. Ein Druckgasvorrat 192 kann angeordnet und verbunden sein, um Druckgas oder den pneumatischen Druck an die Druckgas-Eingänge der Modulatoren 184, 187, 189 bereitzustellen. Verschiedene pneumatische Komponenten wie Steuerventile 193,135 oder ein oder mehrere Rückschlagventile 194 können in dem Bremssystem angeordnet sein.

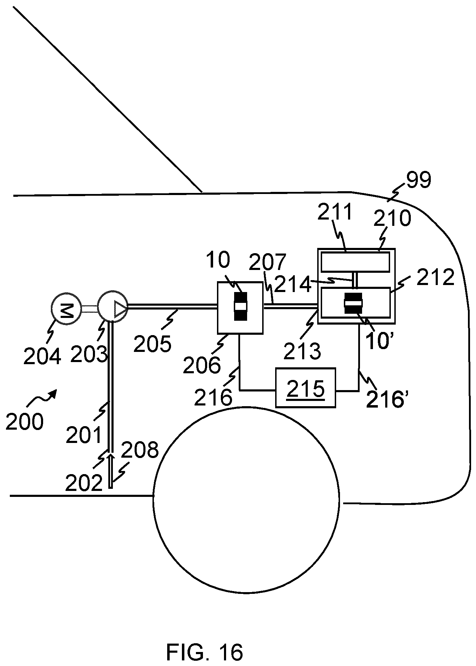

Figur 16 zeigt in einer schematischen Darstellung ein Fahrzeug 99, das ein Luftaufbereitungssystem 200 aufweist. Das Luftaufbereitungssystem 200 ist eingerichtet, ein Verbrauchersystem 210 mit Luft zu versorgen, die von dem Luftaufbereitungssystem 200 aufbereitet wurde (beispielsweise durch Trocknung, Erwärmung, Kühlung, Druckänderung). Das Luftaufbereitungssystem weist eine Ansaugleitung 201 mit einer Ansaugöffnung 202 an. Ein Verdichter 203, der von einem Antrieb 204 antreibbar ist, ist eingerichtet, einen Strom 208 angesaugter Luft über eine erste Verbindungsleitung einem elektropneumatischen Zwischensystem 206 zuzuführen, das wenigstens ein Magnetventil 10 aufweist. Das elektropneumatische Zwischensystem 206 kann eingerichtet sein, die Luft beispielsweise durch Trocknung, Befeuchtung, Erwärmung oder Kühlung aufzubereiten. Das elektropneumatische Zwischensystem 206 ist eingerichtet, um von wenigstens einer Steuerung 215 über eine elektrische Verbindungsleitung 216 angesteuert zu werden, um die gewünschte Aufbereitung auszuführen. Die aufbereitete Luft wird über eine zweite Verbindungsleitung 207 dem Verbrauchersystem 210 zugeführt.

Das Verbrauchersystem 210 weist einen Eingang 213 zum Empfangen der aufbereiteten Luft auf. Das Verbrauchersystem 210 weist wenigstens einen Luftverbraucher 211 auf. Das Verbrauchersystem 210 kann wenigstens eine elektropneumatische Einrichtung 212 aufweisen, die eingerichtet ist, eine Zufuhr der aufbereiteten Luft vom Eingang 213 zum wenigstens einen Luftverbraucher 211 über eine dritte Verbindungsleitung 214 zu steuern oder zu regeln. Die elektropneumatische Einrichtung 212 kann wenigstens ein weiteres Magnetventil 10' aufweisen.

Die Magnetventile 10, 10' weisen eine Ausgestaltung auf, bei der, wie bereits erläutert und unter Bezugnahme auf Figur 1 bis Figur 6 beschrieben wurde, eine Fixieranordnung den Spulendraht formschlüssig an einem Kontaktstift abstützt, um das Risiko eines Drahtbruchs zu verringern. Das Fahrzeugsystem von Figur 16 weist ein reduziertes Risiko auf, dass es aufgrund eines Drahtbruchs eines Spulendrahts eines Magnetventils ausfällt und/oder gewartet werden muss.

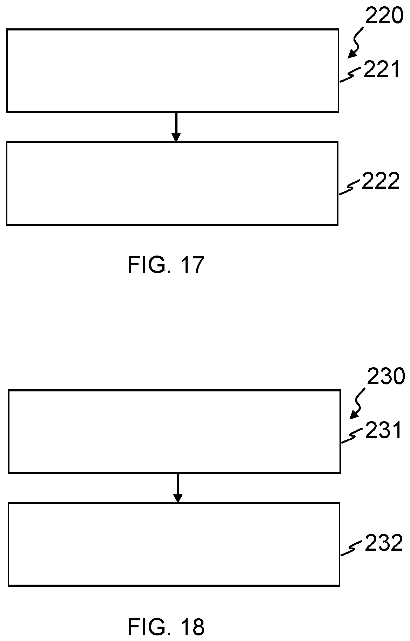

Figur 17 ist ein Flussdiagramm eines Verfahrens 220 nach einer Ausführungsform. Das Verfahren 220 kann von oder mit der Fahrzeugkomponente nach einer Ausführungsform, dem elektropneumatischen Fahrzeugsystem nach einer Ausführungsform oder dem Kraftfahrzeug nach einer Ausführungsform ausgeführt werden. Das Verfahren 200 ist ein Verfahren zum Verringern des Bruchrisikos eines Spulendrahts einer Spule eines Magnetventils einer Fahrzeugkomponente.

Bei Schritt 221 wird der Spulendraht in einem Endabschnitt des Spulendrahts von wenigstens einem Formmerkmal eines Kontaktstifts des Magnetventils formschlüssig abgestützt. Die formschlüssige Abstützung erfolgt in einem Bereich des Kontaktstifts, der von einer Schweißzone verschieden ist, in dem der Spulendraht an dem Kontaktstift angeschweißt ist.

Bei Schritt 222 wird selektiv ein Stromfluss durch den Spulendraht über den Kontaktstift erzeugt, um einen Ventilstellung des Magnetventils zu verändern.

Weitere optionale Merkmale des Verfahrens und die damit jeweils erzielten Wirkungen entsprechen den unter Bezugnahme auf die Fahrzeugkomponente, das elektropneumatische Fahrzeugsystem und das Kraftfahrzeug erläuterten Merkmalen und Wirkungen.

Figur 18 ist ein Flussdiagramm eines Verfahrens 230 nach einer Ausführungsform. Das Verfahren 230 kann zum Herstellen der Fahrzeugkomponente nach einer Ausführungsform, des elektropneumatischen Fahrzeugsystems nach einer Ausführungsform oder des Kraftfahrzeugs nach einer Ausführungsform ausgeführt werden.

Bei Schritt 231 wird ein Kontaktstift eines Magnetventils der Fahrzeugkomponente derart hergestellt, dass der Kontaktstift ein Formmerkmal zum formschlüssigen Abstützen eines Spulendrahts des Magnetventils aufweist. Das Formmerkmal ist separat von einer Schweißzone angeordnet, die zum Befestigen des Spulendrahts über eine Schweißverbindung vorgesehen ist. Das Herstellen des Kontaktstifts kann das Ausstanzen des Kontaktstifts aus einem Blech, beispielsweise aus einer Blechbahn, aufweisen. Das Ausstanzen kann so erfolgen, dass das Formmerkmal durch den Stanzvorgang ausgebildet wird.

Bei Schritt 232 wird ein Endabschnitt des Spulendrahts derart um den Kontaktstift gewunden, dass das Formmerkmal den Spulendraht in dem Endabschnitt formschlüssig an dem Kontaktstift abstützt.

Die Fahrzeugkomponente, das elektropneumatische Fahrzeugsystem, das Kraftfahrzeug und das Verfahren nach Ausführungsbeispielen ermöglichen, das Risiko eines Drahtbruchs zu verhindern. Das Risiko eines durch Drahtbruch verursachten Wartungsausfalls kann somit verringert werden.

Entsprechend werden nach weiteren Ausführungsformen der Erfindung auch die Verwendung der Fahrzeugkomponente, des elektropneumatischen Fahrzeugsystems, des Nutzfahrzeugs und des Verfahrens nach einer Ausführungsform zum Verringern des Risikos eines Drahtbruchs und/oder zum Verringern eines durch Drahtbruch verursachten Wartungsausfalls bereitgestellt.

Die Fahrzeugkomponente, das elektropneumatische Fahrzeugsystem, das Kraftfahrzeug und Verfahren wurden unter Bezugnahme auf die Figuren beschrieben. Abwandlungen und Modifikationen können bei weiteren Ausführungsformen realisiert werden.

Beispielhafte weitere Abwandlungen der detailliert offenbarten Ausführungsformen beinhalten beispielsweise folgende Abwandlungen, ohne darauf beschränkt zu sein: Das Magnetventil muss nicht als 2/2-Wege-Ventil oder als 3/2-Wege-Ventil ausgestaltet sein, sondern kann eine andere Anzahl von Anschlüssen (beispielsweise drei oder vier) und/oder eine andere Anzahl von Ventilstellungen (beispielsweise drei) aufweisen. Beispielsweise kann das Magnetventil ein 3/3WegeVentil sein. Während die Fahrzeugkomponente eine Komponente eines elektropneumatischen Getriebesystems, eines elektropneumatischen Kupplungssystems, eines elektropneumatisches Bremssystems, eines Luftaufbereitungssystems, eines elektropneumatisches Nivellierungssystems, eines elektropneumatischen Luftfedersystem oder eines elektropneumatischen Bremssystems sein kann, kann die Fahrzeugkomponente auch eine Fahrzeugkomponente anderer Systeme sein, beispielsweise eines Sensorreinigungssystems. Die Fahrzeugkomponente und das elektropneumatische Fahrzeugsystem können besonders vorteilhaft in einem Nutzfahrzeug eingesetzt werden, da dort vibrationsbedingte Erschütterungen und/oder die Nutzungsdauer, in der Fahrzeugkomponenten Erschütterungen ausgesetzt sind, ein besonders hohes Risiko eines Verrutschens des Spulendrahts relativ zum Kontaktstift des Magnetventils mit sich bringen. Ein Einsatz in Personenkraftwagen ist jedoch ebenfalls möglich.

### Bezugszeichenliste (Teil der Beschreibung)

| | | | |
|---|---|---|---|
| 10 | Magnetventil | | |
| 10' | Magnetventil | 11 | Spule |
| 12 | Spulendraht | | |
| 13 | Endabschnitt | | |
| 14 | weiterer Endabschnitt | 15 | Spulenträger |
| 16 | Dichtkörper | | |
| 17 | Dichtfläche | | |
| 18 | Ventilsitz | | |
| 19 | federelastisches Mittel | | |
| 20 | Gehäuse | | |
| 21 | erster Anschluss | | |
| 22 | zweiter Anschluss | | |
| 23 | dritter Anschluss | | |
| 24 | erster Fluidraum | | |
| 25 | zweiter Fluidraum | | |
| 26 | Trägerelement | | |
| 27 | erste Fluidverbindung | | |
| 28 | zweite Fluidverbindung | | |
| 30 | Kontaktstift | | |
| 30' | weiterer Kontaktstift | | |
| 31 | Anschlussbereich | | |
| 32 | Schweißzone | | |
| 33 | Schweißverbindung | | |
| 34 | nutförmiges Formmerkmal | | |
| 35 | Überdeckung | | |
| 36 | von Schweißzone beabstandeter Bereich des Kontaktstifts | | |
| 41 | Hauptfläche | | |
| 42 | weitere Hauptfläche | | |
| 43 | Seitenfläche | | |
| 44 | Nuttiefe | | |
| 45 | Nutbreite | | |
| 46 | Blechdicke | | |
| 47 | tiefster Punkt der Nut | | |
| 48 | Drahtdurchmesser | | |
| 49 | weitere Seitenfläche | | |
| 51 | Erstreckungsrichtung | | |
| 52 | Breitenrichtung | | |
| 53 | Dickenrichtung | | |
| 54 | Nut-Begrenzungsfläche | | |
| 55 | Übergangsfläche | | |
| 56 | weitere Übergangsfläche | | |
| 57 | Kontaktstiftbreite | | |
| 58 | weitere Kontaktstiftbreite | | |
| 61 | erste Reihe von Nuten | | |
| 62 | zweite Reihe von Nuten | | |
| 63 | Vorsprung | | |
| 64 | weiterer Vorsprung | | |
| 65 | Vorsprungsabstand | | |
| 66 | Vorsprungshöhe | | |
| 70 | elektropneumatisches Steuergerät | | |
| 71 | Steuerelektronik | | |
| 72 | elektronische Schnittstelle | | |
| 73 | Leiterplatte | | |
| 74 | Druckgaseingang | | |
| 75 | Verbraucherausgang | | |
| 76 | weiterer Verbraucherausgang | | |
| 77 | Entlüftungsöffnung | | |
| 79 | Leitungspfade | | |
| 80 | elektropneumatisches Fahrzeugsystem | | |
| 81 | Steuereinheit | | |
| 82 | Signal- oder Datenverbindung | | |
| 83 | Druckgasversorgungsanlage | | |
| 84 | Druckgasspeicher | | |
| 85 | Versorgungsleitung | | |
| 86 | Verbrauchersystem | | |
| 87 | pneumatischer Verbraucher | | |
| 88 | weiterer pneumatischer Verbraucher | | |
| 89 | Verbraucherleitung | | |
| 90 | weitere Verbraucherleitung | | |
| 91 | steuerbares Ventil | | |
| 99 | Kraftfahrzeug | | |
| 100 | automatisches Schaltgetriebe | | |
| 101 | Schaltwelle | | |
| 102 | Gassensperrventil | | |
| 103 | 3/2-Wege-Ventil | | |
| 104 | 3/3-Wege-Ventil | | |
| 105 | pneumatisches Verbindungssystem | | |
| 106 | Zufuhrverbindung | | |
| 110 | automatisches Schaltgetriebesystem | | |
| 111 | Kupplung | | |
| 112 | Getriebe | | |
| 113 | Getriebeschaltstange | | |
| 114 | Auswahleinrichtung | | |
| 115 | erste Mehrzahl von Magnetventilen | | |
| 116 | Gangwechseleinrichtung | | |
| 117 | Hebel | | |
| 118 | zweite Mehrzahl von Magnetventilen | | |
| 119 | Getriebesteller | | |
| 120 | dritte Mehrzahl von Magnetventilen | | |
| 121 | elektronische Steuereinheit(en) | | |
| 122 | pneumatische Versorgungsleitung | | |
| 123 | elektrische Verbindung(en) | | |
| 130 | elektropneumatisches Handbremssystem | | |
| 131 | Betätigungseinrichtung | | |
| 132 | Bremszylinder | | |
| 133 | Feststellbremse | | |
| 134 | Rad | | |
| 140 | elektropneumatisches Kupplungssystem | | |
| 141 | pneumatische betätigbare Kupplung | | |
| 142 | elektropneumatische Kupplungsbetätigungseinrichtung | | |
| 143 | Magnetventil(e) | | |
| 144 | elektronische Steuereinheit | | |
| 145 | Sensor(en) | | |
| 146 | Steuergerät | | |
| 147 | pneumatische Versorgungsleitung | | |
| 148 | elektrische Verbindung(en) | | |
| 150 | elektropneumatisches Kabinennivelliersystem | | |
| 151 | Fahrgestell | | |
| 152 | Kabine | | |
| 153 | pneumatisches Einstellelement | | |
| 153' | weiteres pneumatisches Einstellelement | | |
| 154 | elektropneumatische Steuereinrichtung | | |
| 155 | Magnetventil(e) | | |
| 156 | Druckgaseingang | | |
| 157 | Entlüftungsöffnung | | |
| 158 | Druckgasausgang | | |
| 159 | pneumatische Verbindungsleitung | | |
| 160 | Verstellweg zur Nivellierung | | |
| 170 | elektropneumatisches Stoßdämpfersystem | | |
| 173 | pneumatischer Stoßdämpfer | | |
| 173' | weiterer pneumatisches Stoßdämpfer | | |
| 174 | elektropneumatische Steuereinrichtung | | |
| 175 | Magnetventil(e) | | |
| 176 | Druckgaseingang | | |
| 177 | Entlüftungsöffnung | | |
| 178 | Druckgasausgang | | |
| 179 | pneumatische Verbindungsleitung | | |
| 180 | pneumatisches Fahrzeugsystem | | |
| 181 | Bremswertgeber | | |
| 182 | Betätigungselement | | |
| 183 | Elektronisches Bremssystem | | |
| 184 | Modulator | | |
| 185 | Vorderachs-Bremszylinder | | |
| 186 | Redundanzventil | | |
| 187 | Achsmodulator | | |
| 188 | Bremszylinder | | |
| 189 | weiterer Achsmodulator | | |
| 190 | Bremszylinder | | |
| 191 | Sensoren | | |
| 192 | Druckgasvorrat | | |
| 193 | Steuerventil | | |
| 194 | Rückschlagventil | | |
| 195 | weiteres Steuerventil | | |
| 200 | Luftaufbereitungssystem | | |
| 201 | Ansaugleitung | | |
| 202 | Ansaugöffnung | | |
| 203 | Verdichter | | |
| 204 | Antrieb | | |
| 205 | erste Verbindungsleitung | | |
| 206 | elektropneumatisches Zwischensystem | | |
| 207 | zweite Verbindungsleitung | | |
| 210 | Verbrauchersystem | | |
| 211 | Luftverbraucher | | |
| 212 | elektropneumatische Steuerung | | |
| 213 | Eingang | | |
| 214 | dritte Verbindungsleitung | | |
| 215 | elektrische Steuerung(en) | | |
| 216 | elektrische Verbindungsleitung | | |
| 216' | weitere elektrische Verbindungsleitung | | |
| 220 | Verfahren | | |
| 221 | Verfahrensschritt | | |
| 222 | Verfahrensschritt | | |
| 230 | Verfahren | | |
| 231 | Verfahrensschritt | | |
| 232 | Verfahrensschritt | | |

## Patentansprüche

1. Fahrzeugkomponente (10; 70; 102-104; 114, 116, 119; 142; 154; 174; 184, 187, 189; 200, 210), aufweisend:
ein Magnetventil (10; 10'), das eine einen Spulendraht (12) aufweisende Spule (11) und einen Kontaktstift (30, 30') zum elektrischen Kontaktieren des Spulendrahts (12) aufweist, wobei der Kontaktstift (30, 30') eine Schweißzone (32) aufweist, an der der Spulendraht (12) durch eine Schweißverbindung (33) befestigt ist,
**gekennzeichnet durch**
eine Fixieranordnung (34; 61, 62; 63, 64) zum mechanischen Fixieren des Spulendrahts (12) in einem von der Schweißverbindung (33) beabstandeten Bereich (36) des Kontaktstifts (30, 30').

2. Fahrzeugkomponente (10; 70; 102-104; 114, 116, 119; 142; 154; 174; 184, 187, 189; 200, 210) nach Anspruch 1, wobei die Fixieranordnung (34; 61, 62; 63, 64) eingerichtet ist, den Spulendraht (12) an dem von der Schweißverbindung (33) beabstandeten Bereich (36) des Kontaktstifts (30, 30') formschlüssig abzustützen.

3. Fahrzeugkomponente (10; 70; 102-104; 114, 116, 119; 142; 154; 174; 184, 187, 189; 200, 210) nach Anspruch 1 oder Anspruch 2, wobei die Fixieranordnung (34; 61, 62; 63, 64) wenigstens ein an dem Kontaktstift (30, 30') vorgesehenes Formmerkmal (34; 61, 62; 63, 64) aufweist, das eingerichtet ist, den Spulendraht (12) formschlüssig abzustützen.

4. Fahrzeugkomponente (10; 70; 102-104; 114, 116, 119; 142; 154; 174; 184, 187, 189; 200, 210) nach Anspruch 3, wobei das wenigstens eine Formmerkmal (34; 61, 62) wenigstens eine Vertiefung (34; 61, 62) aufweist, durch die sich der Spulendraht (12) erstreckt.

5. Fahrzeugkomponente (10; 70; 102-104; 114, 116, 119; 142; 154; 174; 184, 187, 189; 200, 210) nach Anspruch 4, wobei die wenigstens eine Vertiefung (34; 61, 62) eine kerbenförmige Vertiefung (34) aufweist.

6. Fahrzeugkomponente (10; 70; 102-104; 114, 116, 119; 142; 154; 174; 184, 187, 189; 200, 210) nach einem der Ansprüche 3 bis 5, wobei die Fixieranordnung (34; 61, 62; 63, 64) mehrere voneinander beabstandete Vertiefungen (61, 62) aufweist, durch die sich der Spulendraht (12) erstreckt.

7. Fahrzeugkomponente (10; 70; 102-104; 114, 116, 119; 142; 154; 174; 184, 187, 189; 200, 210) nach einem der vorhergehenden Ansprüche, wobei sich der Kontaktstift (30, 30') entlang einer Erstreckungsrichtung (51) erstreckt, wobei der Spulendraht (12) entlang der Erstreckungsrichtung (51) der Kontaktstift (30, 30') schraubenlinienförmig umläuft, wobei die Fixieranordnung (34; 61, 62; 63, 64) eingerichtet ist, eine Relativbewegung zwischen dem Spulendraht (12) und dem Kontaktstift (30, 30') entlang der Erstreckungsrichtung (51) zu reduzieren oder zu unterbinden.

8. Fahrzeugkomponente (10; 70; 102-104; 114, 116, 119; 142; 154; 174; 184, 187, 189; 200, 210) nach Anspruch 7, wobei der Kontaktstift (30, 30') eine in einer quer zur Erstreckungsrichtung (51) verlaufenden Breitenrichtung (52) gemessene Kontaktstiftbreite (57, 58) aufweist, wobei die Kontaktstiftbreite (57, 58) in dem von der Schweißverbindung (33) beabstandeten Bereich (36) des Kontaktstifts (30, 30') als Funktion einer Position entlang der Erstreckungsrichtung (51) variiert.

9. Fahrzeugkomponente (10; 70; 102-104; 114, 116, 119; 142; 154; 174; 184, 187, 189; 200, 210) nach Anspruch 8, wobei die Kontaktstiftbreite (57, 58) in dem von der Schweißverbindung (33) beabstandeten Bereich (36) des Kontaktstifts (30, 30') eine nichtmonotone Veränderung aufweist.

10. Elektropneumatisches Fahrzeugsystem, aufweisend die Fahrzeugkomponente (10; 70; 102-104; 114, 116, 119; 142; 154; 174; 184, 187, 189; 200, 210) nach einem der vorhergehenden Ansprüche.

11. Elektropneumatisches Fahrzeugsystem (80; 100; 110; 130; 140; 150; 170; 180; 200, 210) nach Anspruch 10, wobei das elektropneumatische Fahrzeugsystem (80; 100; 110; 130; 140; 150; 170; 180; 200, 210) ein elektropneumatisches Getriebesystem (100, 110), ein elektropneumatisches Kupplungssystem (140), ein elektropneumatisches Bremssystem (130, 180), ein Luftaufbereitungssystem (200), ein elektropneumatisches Nivellierungssystem (150) und/oder ein elektropneumatisches Luftfedersystem (170) aufweist.

12. Kraftfahrzeug (99), aufweisend die Fahrzeugkomponente (10; 70; 102-104; 114, 116, 119; 142; 154; 174; 184, 187, 189; 200, 210) nach einem der Ansprüche 1 bis 9 oder das elektropneumatische Fahrzeugsystem (80; 100; 110; 130; 140; 150; 170; 180; 200, 210) nach Anspruch 10 oder nach Anspruch 11.

13. Verfahren zum Reduzieren eines Bruchrisikos eines Spulendrahts (12) eines Magnetventils (10; 10') einer Fahrzeugkomponente (10; 70; 102-104; 114, 116, 119; 142; 154; 174; 184, 187, 189; 200, 210), wobei das Magnetventil (10; 10') einen Kontaktstift (30, 30') aufweist, wobei der Kontaktstift (30, 30') eine Schweißzone (32) aufweist, und wobei der Spulendraht (12) durch eine Schweißverbindung (33) an der Schweißzone (32) befestigt ist, wobei das Verfahren aufweist:
mechanischen Fixieren des Spulendrahts (12) in einem von der Schweißverbindung (33) beabstandeten Bereich (36) des Kontaktstifts (30, 30'), um eine Relativbewegung zwischen dem Spulendraht (12) und dem Kontaktstift (30, 30') in dem von der Schweißverbindung (33) beabstandeten Bereich (36) des Kontaktstifts (30, 30') zu verringern oder zu unterbinden.

14. Verfahren nach Anspruch 13, ferner aufweisend: Bilden wenigstens eines Formmerkmals (34; 61, 62; 63, 64) an dem Kontaktstift (30, 30'), wobei das wenigstens eine Formmerkmal (34; 61, 62; 63, 64) eingerichtet ist, den Spulendraht (12) formschlüssig abzustützen, wobei das mechanische Fixieren ein schraubenförmiges Winden eines Endabschnitts (13, 14) des Spulendrahts (12) um den Kontaktstift (30, 30') derart aufweist, dass das wenigstens eine Formmerkmal (34; 61, 62; 63, 64) den Spulendraht (12) formschlüssig abstützt.

15. Verfahren nach Anspruch 14 oder nach Anspruch 13, wobei das Verfahren mit der Fahrzeugkomponente (10; 70; 102-104; 114, 116, 119; 142; 154; 174; 184, 187, 189; 200, 210) nach einem der Ansprüche 1 bis 9, dem elektropneumatische Fahrzeugsystem (80; 100; 110; 130; 140; 150; 170; 180; 200, 210) nach Anspruch 10 oder nach Anspruch 11 oder dem Kraftfahrzeug (99) nach Anspruch 12 ausgeführt wird.

## Claims

1. Vehicle component (10; 70; 102-104; 114, 116, 119; 142; 154; 174; 184, 187, 189; 200, 210) comprising:
a solenoid valve (10; 10') which comprises a coil (11) having a coil wire (12) and which comprises a contact pin (30, 30') for electrically contacting the coil wire (12), wherein the contact pin (30, 30') has a weld zone (32) to which the coil wire (12) is fastened by a welded joint (33),
**characterized by**
a fixing arrangement (34; 61, 62; 63, 64) for mechanically fixing the coil wire (12) in a region (36) of the contact pin (30, 30') that is spaced from the welded joint (33).

2. Vehicle component (10; 70; 102-104; 114, 116, 119; 142; 154; 174; 184, 187, 189; 200, 210) according to claim 1, wherein the fixing arrangement (34; 61, 62; 63, 64) is designed to support the coil wire (12) in a form-fitting manner at the region (36) of the contact pin (30, 30') that is spaced from the welded joint (33).

3. Vehicle component (10; 70; 102-104; 114, 116, 119; 142; 154; 174; 184, 187, 189; 200, 210) according to claim 1 or claim 2, wherein the fixing arrangement (34; 61, 62; 63, 64) has at least one form feature (34; 61, 62; 63, 64) provided at the contact pin (30, 30'), which form feature is designed to support the coil wire (12) in a form-fitting manner.

4. Vehicle component (10; 70; 102-104; 114, 116, 119; 142; 154; 174; 184, 187, 189; 200, 210) according to claim 3, wherein the at least one form feature (34; 61, 62) has at least one recess (34; 61, 62), through which the coil wire (12) extends.

5. Vehicle component (10; 70; 102-104; 114, 116, 119; 142; 154; 174; 184, 187, 189; 200, 210) according to claim 4, wherein the at least one recess (34; 61, 62) comprises a notch-shaped recess (34).

6. Vehicle component (10; 70; 102-104; 114, 116, 119; 142; 154; 174; 184, 187, 189; 200, 210) according to any of claims 3 to 5, wherein the fixing arrangement (34; 61, 62; 63, 64) has a plurality of recesses (61, 62) spaced from one another, through which the coil wire (12) extends.

7. Vehicle component (10; 70; 102-104; 114, 116, 119; 142; 154; 174; 184, 187, 189; 200, 210) according to any of the preceding claims, wherein the contact pin (30, 30') extends along a direction of extension (51), wherein the coil wire (12) extends helically around the contact pin (30, 30') along the direction of extension (51), wherein the fixing arrangement (34; 61, 62; 63, 64) is designed to reduce or prevent a relative movement between the coil wire (12) and the contact pin (30, 30') along the direction of extension (51).

8. Vehicle component (10; 70; 102-104; 114, 116, 119; 142; 154; 174; 184, 187, 189; 200, 210) according to claim 7, wherein the contact pin (30, 30') has a contact pin width (57, 58) measured in a width direction (52) running transversely to the direction of extension (51), wherein the contact pin width (57, 58) in the region (36) of the contact pin (30, 30') that is spaced from the welded joint (33) varies depending on a position along the direction of extension (51).

9. Vehicle component (10; 70; 102-104; 114, 116, 119; 142; 154; 174; 184, 187, 189; 200, 210) according to claim 8, wherein the contact pin width (57, 58) has a non-monotonic change in the region (36) of the contact pin (30, 30') that is spaced from the welded joint (33).

10. Electropneumatic vehicle system comprising the vehicle component (10; 70; 102-104; 114, 116, 119; 142; 154; 174; 184, 187, 189; 200, 210) according to any of the preceding claims.

11. Electropneumatic vehicle system (80; 100; 110; 130; 140; 150; 170; 180; 200, 210) according to claim 10, wherein the electropneumatic vehicle system (80; 100; 110; 130; 140; 150; 170; 180; 200, 210) comprises an electropneumatic transmission system (100, 110), an electropneumatic clutch system (140), an electropneumatic braking system (130, 180), an air treatment system (200), an electropneumatic leveling system (150) and/or an electropneumatic air spring system (170).

12. Motor vehicle (99) comprising the vehicle component (10; 70; 102-104; 114, 116, 119; 142; 154; 174; 184, 187, 189; 200, 210) according to any of claims 1 to 9 or the electropneumatic vehicle system (80; 100; 110; 130; 140; 150; 170; 180; 200, 210) according to claim 10 or according to claim 11.

13. Method for reducing a breakage risk of a coil wire (12) of a solenoid valve (10; 10') of a vehicle component (10; 70; 102-104; 114, 116, 119; 142; 154; 174; 184, 187, 189; 200, 210), wherein the solenoid valve (10; 10') has a contact pin (30, 30'), wherein the contact pin (30, 30') has a weld zone (32), and wherein the coil wire (12) is fastened to the weld zone (32) by a welded joint (33), wherein the method comprises:
mechanically fixing the coil wire (12) in a region (36) of the contact pin (30, 30') that is spaced from the welded joint (33), in order to reduce or prevent a relative movement between the coil wire (12) and the contact pin (30, 30') in the region (36) of the contact pin (30, 30') that is spaced from the welded joint (33).

14. Method according to claim 13, further comprising: forming at least one form feature (34; 61, 62; 63, 64) at the contact pin (30, 30'), wherein the at least one form feature (34; 61, 62; 63, 64) is designed to support the coil wire (12) in a form-fitting manner, wherein the mechanical fixing comprises a helical winding of an end portion (13, 14) of the coil wire (12) around the contact pin (30, 30') such that the at least one form feature (34; 61, 62; 63, 64) supports the coil wire (12) in a form-fitting manner.

15. Method according to claim 14 or according to claim 13, wherein the method is carried out with the vehicle component (10; 70; 102-104; 114, 116, 119; 142; 154; 174; 184, 187, 189; 200, 210) according to any of claims 1 to 9, the electropneumatic vehicle system (80; 100; 110; 130; 140; 150; 170; 180; 200, 210) according to claim 10 or according to claim 11 or the motor vehicle (99) according to claim 12.

## Revendications

1. Composant de véhicule (10 ; 70 ; 102-104 ; 114, 116, 119 ; 142 ; 154 ; 174 ; 184, 187, 189 ; 200, 210), présentant :
une électrovanne (10 ; 10') qui présente une bobine (11) présentant un fil de bobine (12), et une broche de contact (30, 30') destinée à établir un contact électrique avec le fil de bobine (12), dans lequel la broche de contact (30, 30') présente une zone de soudure (32) au niveau de laquelle le fil de bobine (12) est fixé par une liaison soudée (33),
**caractérisé par**
un agencement de fixation (34 ; 61, 62 ; 63, 64) destiné à fixer mécaniquement le fil de bobine (12) dans une zone (36) de la broche de contact (30, 30') située à distance de la liaison soudée (33).

2. Composant de véhicule (10 ; 70 ; 102-104 ; 114, 116, 119 ; 142 ; 154 ; 174 ; 184, 187, 189 ; 200, 210) selon la revendication 1, dans lequel l'agencement de fixation (34 ; 61, 62 ; 63, 64) est conçu pour soutenir par complémentarité de forme le fil de bobine (12) au niveau de la zone (36) de la broche de contact (30, 30') située à distance de la liaison soudée (33).

3. Composant de véhicule (10 ; 70 ; 102-104 ; 114, 116, 119 ; 142 ; 154 ; 174 ; 184, 187, 189 ; 200, 210) selon la revendication 1 ou la revendication 2, dans lequel l'agencement de fixation (34 ; 61, 62 ; 63, 64) présente au moins une caractéristique de forme (34 ; 61, 62 ; 63, 64) prévue sur la broche de contact (30, 30'), laquelle caractéristique de forme est conçue pour soutenir le fil de bobine (12) par complémentarité de forme.

4. Composant de véhicule (10 ; 70 ; 102-104 ; 114, 116, 119 ; 142 ; 154 ; 174 ; 184, 187, 189 ; 200, 210) selon la revendication 3, dans lequel l'au moins une caractéristique de forme (34 ; 61, 62) présente au moins un renfoncement (34 ; 61, 62) à travers lequel s'étend le fil de bobine (12).

5. Composant de véhicule (10 ; 70 ; 102-104 ; 114, 116, 119 ; 142 ; 154 ; 174 ; 184, 187, 189 ; 200, 210) selon la revendication 4, dans lequel l'au moins un renfoncement (34 ; 61, 62) présente un renfoncement en forme d'encoche (34).

6. Composant de véhicule (10 ; 70 ; 102-104 ; 114, 116, 119 ; 142 ; 154 ; 174 ; 184, 187, 189 ; 200, 210) selon l'une des revendications 3 à 5, dans lequel l'agencement de fixation (34 ; 61, 62 ; 63, 64) présente plusieurs renfoncements (61, 62) espacés les uns des autres, à travers lesquels s'étend le fil de bobine (12).

7. Composant de véhicule (10 ; 70 ; 102-104 ; 114, 116, 119 ; 142 ; 154 ; 174 ; 184, 187, 189 ; 200, 210) selon l'une des revendications précédentes, dans lequel la broche de contact (30, 30') s'étend selon une direction d'extension (51), dans lequel le fil de bobine (12) s'enroule en hélice autour de la broche de contact (30, 30') selon la direction d'extension (51), dans lequel l'agencement de fixation (34 ; 61, 62 ; 63, 64) est conçu pour réduire ou empêcher un mouvement relatif entre le fil de bobine (12) et la broche de contact (30, 30') le long de la direction d'extension (51).

8. Composant de véhicule (10 ; 70 ; 102-104 ; 114, 116, 119 ; 142 ; 154 ; 174 ; 184, 187, 189 ; 200, 210) selon la revendication 7, dans lequel la broche de contact (30, 30') présente une largeur de broche de contact (57, 58) mesurée dans une direction de largeur (52) s'étendant transversalement à la direction d'extension (51), dans lequel la largeur de broche de contact (57, 58) varie dans la zone (36) de la broche de contact (30, 30') située à distance de la liaison soudée (33), en fonction d'une position le long de la direction d'extension (51).

9. Composant de véhicule (10 ; 70 ; 102-104 ; 114, 116, 119 ; 142 ; 154 ; 174 ; 184, 187, 189 ; 200, 210) selon la revendication 8, dans lequel la largeur de broche de contact (57, 58) présente une variation non monotone dans la zone (36) de la broche de contact (30, 30') située à distance de la liaison soudée (33).

10. Système électropneumatique pour véhicule, présentant le composant de véhicule (10 ; 70 ; 102-104 ; 114, 116, 119 ; 142 ; 154 ; 174 ; 184, 187, 189 ; 200, 210) selon l'une des revendications précédentes.

11. Système électropneumatique pour véhicule (80 ; 100 ; 110 ; 130 ; 140 ; 150 ; 170 ; 180 ; 200, 210) selon la revendication 10, dans lequel le système électropneumatique pour véhicule (80 ; 100 ; 110 ; 130 ; 140 ; 150 ; 170 ; 180 ; 200, 210) présente un système de transmission électropneumatique (100, 110), un système d'embrayage électropneumatique (140), un système de freinage électropneumatique (130, 180), un système de traitement d'air (200), un système de nivellement électropneumatique (150) et/ou un système de suspension pneumatique électropneumatique (170).

12. Véhicule automobile (99) présentant le composant de véhicule (10 ; 70 ; 102-104 ; 114, 116, 119 ; 142 ; 154 ; 174 ; 184, 187, 189 ; 200, 210) selon l'une des revendications 1 à 9, ou le système électropneumatique pour véhicule (80 ; 100 ; 110 ; 130 ; 140 ; 150 ; 170 ; 180 ; 200, 210) selon la revendication 10 ou selon la revendication 11.

13. Procédé destiné à réduire le risque de rupture d'un fil de bobine (12) d'une électrovanne (10 ; 10') d'un composant de véhicule (10 ; 70 ; 102-104 ; 114, 116, 119 ; 142 ; 154 ; 174 ; 184, 187, 189 ; 200, 210), dans lequel l'électrovanne (10 ; 10') présente une broche de contact (30, 30'), dans lequel la broche de contact (30, 30') présente une zone de soudure (32), et dans lequel le fil de bobine (12) est fixé à la zone de soudure (32) par une liaison soudée (33), dans lequel le procédé présente :
la fixation mécanique du fil de bobine (12) dans une zone (36) de la broche de contact (30, 30') située à distance de la liaison soudée (33), afin de réduire ou d'empêcher tout mouvement relatif entre le fil de bobine (12) et la broche de contact (30, 30') dans la zone (36) de la broche de contact (30, 30') située à distance de la liaison soudée (33).

14. Procédé selon la revendication 13, présentant en outre : la formation d'au moins une caractéristique de forme (34 ; 61, 62 ; 63, 64) sur la broche de contact (30, 30'), dans lequel l'au moins une caractéristique de forme (34 ; 61, 62 ; 63, 64) est conçue pour soutenir le fil de bobine (12) par complémentarité de forme, dans lequel la fixation mécanique présente un enroulement hélicoïdal d'une section d'extrémité (13, 14) du fil de bobine (12) autour de la broche de contact (30, 30') de telle sorte que l'au moins une caractéristique de forme (34 ; 61, 62 ; 63, 64) soutienne le fil de bobine (12) par complémentarité de forme.

15. Procédé selon la revendication 14 ou selon la revendication 13, dans lequel le procédé est mis en œuvre au moyen du composant de véhicule (10 ; 70 ; 102-104 ; 114, 116, 119 ; 142 ; 154 ; 174 ; 184, 187, 189 ; 200, 210) selon l'une des revendications 1 à 9, du système électropneumatique pour véhicule (80 ; 100 ; 110 ; 130 ; 140 ; 150 ; 170 ; 180 ; 200, 210) selon la revendication 10 ou selon la revendication 11, ou du véhicule automobile (99) selon la revendication 12.
